# EUROPÄISCHE PATENTSCHRIFT

(11) **EP 2 945 769 B1**
(45) Veröffentlichungstag und Bekanntmachung des Hinweises auf die Patenterteilung: **26.04.2017**
(21) Anmeldenummer: 14700411.3
(22) Anmeldetag: 14.01.2014
(51) Int. Cl.: B23K 26/00, B23K 26/06, B23K 26/067, B23K 26/40, C03B 33/09

(54) **VERFAHREN UND VORRICHTUNG ZUM LASERBASIERTEN BEARBEITEN VON FLÄCHIGEN SUBSTRATEN UNTER VERWENDUNG EINER LASERSTRAHLBRENNLINIE ; ENTSPRECHENDE GLASGEGENSTÄNDE**
METHOD OF AND APPARATUS FOR LASER BASED PROCESSING OF FLAT SUBSTRATES USING A LASER BEAM LINE ; CORRESPONDING GLASS PRODUCTS
PROCÉDÉ ET DISPOSITIF DESTINÉS AU TRAITEMENT BASÉ SUR LASER DE SUBSTRATS PLATS UTILISANT UN FAISCEAU LASER EN LIGNE ; PRODUITS EN VERRE CORRESPONDANTS

(30) Priorität: 15.01.2013 EP 13151296; 15.01.2013 US 201361752489 P
(43) Veröffentlichungstag der Anmeldung: 25.11.2015
(73) Patentinhaber: Corning Laser Technologies GmbH, 82152 Krailling (DE)
(72) Erfinder: GRUNDMÜLLER, Richard, 82152 Krailling (DE); SCHILLINGER, Helmut, 82152 Krailling (DE)
(74) Vertreter: Pfenning, Meinig & Partner mbB
(86) Internationale Anmeldenummer: PCT/EP2014/050610
(87) Internationale Veröffentlichungsnummer: WO 2014/111385

(56) Entgegenhaltungen:
- WO-A1-2012/108052
- WO-A2-2012/006736
- KR-B1- 101 120 471
- US-A1- 2005 024 743
- US-A1- 2005 098 548

## Beschreibung

Die vorliegende Erfindung bezieht sich auf ein Verfahren und eine Vorrichtung laserbasierten Bearbeiten von bevorzugt flächigen Substraten gemäß des Oberbegriffs der Ansprüche 1 und 12, sowie auf Glas-Gegenstände gemäß des Oberbegriffs der Ansprüche 18-19 (siehe, z.B., WO2012/006736 A). Das Verfahren und die Vorrichtung haben dabei insbesondere zum Ziel, flächige Substrate wie Halbleiterwafer, Glaselemente, ... (insbesondere aus spröden Materialien) in mehrere Teile zu trennen (Auseinzeln der Wafer bzw. Glaselemente). Wie nachfolgend noch im Detail beschrieben wird, wird dabei mit in der Regel gepulsten Lasern mit einer Wellenlänge gearbeitet, für die die Materialien im Wesentlichen transparent sind.
Aus dem Stand der Technik sind bereits Vorrichtungen und Verfahren zum Durchtrennen solcher Materialien mittels Laser bekannt.

Zum einen (z.B. DE 10 2011 000 768 A1) kann man Laser verwenden, die vermöge ihrer Wellenlänge oder ihrer Leistung vom Material stark absorbiert werden, oder nach erster Wechselwirkung das Material stark absorbierend machen (Erwärmung mit z.B. Erzeugung von Ladungsträgern; induzierte Absorption), und dann das Material ablatieren können. Diese Methode hat bei vielen Materialien Nachteile: z.B. Verunreinigungen durch Partikelbildung bei der Ablation; Schnittkanten können Mikrorisse aufweisen aufgrund des thermischen Eintrags; Schnittkanten können Schmelzränder aufweisen; der Schnittspalt ist über die Dicke des Materials nicht gleichförmig (hat unterschiedliche Breite in unterschiedlicher Tiefe; z.B. keilförmige Schnittkerbe). Da Material verdampft oder verflüssigt werden muss, muss eine hohe mittlere Laserleistung bereitgestellt werden.

Zum anderen sind Lasermethoden zum Durchtrennen spröder Materialien bekannt, die über eine gezielte, vom Laser induzierte Rissbildung funktionieren. Beispielsweise gibt es eine Methode von Jenoptik, bei der an der Oberfläche zuerst mit dem Laser eine Spur stark erhitzt wird, und unmittelbar danach diese Spur so schnell abgekühlt wird (z.B. mittels eines Wasserstrahls), dass die dadurch erzielten thermischen Spannungen zu einer Rissbildung führen, die durch die Dicke des Materials propagiert werden können (mechan. Stress), um das Material zu durchtrennen.

Weiterhin gibt es Verfahren, bei denen ein Laser verwendet wird, bei dessen Wellenlänge das Material weitgehend transparent ist, sodass ein Brennpunkt im Inneren des Materials erzeugt werden kann. Die Intensität des Lasers muss so hoch sein, dass an diesem inneren Brennpunkt im Material des bestrahlten Substrats eine innere Schädigung stattfindet.

Letztgenannte Verfahren haben den Nachteil, dass die induzierte Rissbildung punktförmig in einer bestimmten Tiefe, bzw. an der Oberfläche, stattfindet, somit die volle Dicke des Materials erst über eine zusätzliche, mechanisch und/oder thermisch induzierte Risspropagation durchtrennt wird. Da Risse sich tendenziell ungleichförmig ausbreiten, ist die Trennfläche meist von hoher Rauheit und muss oft nachbearbeitet werden. Zudem muss derselbe Prozess mehrfach in verschiedenen Tiefen angewandt werden. Das wiederum verlängert die Prozessgeschwindigkeit um das entsprechend Vielfache.

Ausgehend vom Stand der Technik ist es daher die Aufgabe der vorliegenden Erfindung, ein Verfahren (sowie eine entsprechende Vorrichtung) zur Verfügung zu stellen, mit dem flächige Substrate insbesondere aus spröden Materialien ohne Partikelbildung, ohne Schmelzränder, mit minimaler Rissbildung am Rand, ohne merkliche Schnittspalte (also Materialverluste) mit möglichst geraden Schnittkanten und mit hoher Prozessgeschwindigkeit bearbeitet, insbesondere vollständig durchtrennt werden können.

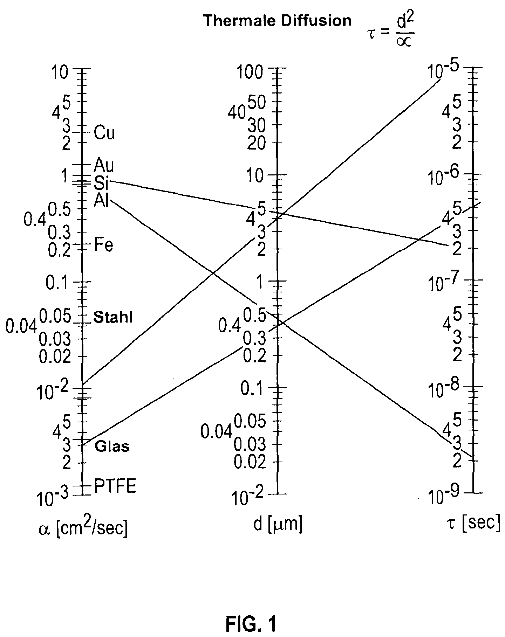

Diese Aufgabe wird durch ein Verfahren gemäß Anspruch 1, durch eine Vorrichtung gemäß Anspruch 12, sowie durch Glas-Gegenstände gemäß Ansprüche 18-19 gelöst. Vorteilhafte Ausführungsvarianten und/oder Weiterbildungen des Verfahrens bzw. der Vorrichtung lassen sich jeweils den abhängigen Ansprüchen entnehmen. Wesentliche erfindungsgemäße Verwendungen sind im Anspruch 17 beschirieben.
Nachfolgend wird die vorliegenden Erfindung zunächst allgemein, dann anhand mehrerer Ausführungsbeispiele im Detail beschrieben. Die in den einzelnen Ausführungsbeispielen in Kombination miteinander gezeigten Merkmale müssen dabei im Rahmen der Erfindung nicht alle verwirklicht sein. Insbesondere können einzelne Merkmale auch weggelassen werden oder auf andersartige Art und Weise mit anderen gezeigten Merkmalen desselben Ausführungsbeispiels oder auch anderer Ausführungsbeispiele kombiniert werden. Auch können bereits einzelne Merkmale eines Ausführungsbeispiels für sich vorteilhafte Weiterbildungen des Standes der Technik aufzeigen.
Nachfolgend wird zunächst die Grundlage der vorliegenden Erfindung (Mechanismus des Trennens des Substrats in einzelne Teile gemäß der Erfindung) beschrieben.
Das Verfahren zum Trennen gemäß der Erfindung erzeugt pro Laserpuls eine Laser-Brennlinie (im Unterschied zu einem Brennpunkt) mittels einer dazu geeigneten Laseroptik (nachfolgend auch als optische Anordnung bezeichnet). Die Brennlinie bestimmt die Zone der Wechselwirkung zwischen Laser und Material des Substrats. Fällt die Brennlinie in das zu trennende Material, so können die Laserparameter so gewählt werden, dass eine Wechselwirkung mit dem Material stattfindet, die gemäß der Erfindung eine Risszone entlang der Brennline erzeugt. Wichtige Laserparameter sind hier die Wellenlänge des Lasers, die Impulsdauer des Lasers, die Pulsenergie des Lasers und ggf. auch die Polarisation des Lasers.
Für die Wechselwirkung des Laserlichts mit dem Material gemäß der Erfindung sollte bevorzugt folgendes gegeben sein:
1) Die Wellenlänge 1 des Lasers ist gemäß der Erfindung so gewählt, dass das Material im wesentlichen transparent bei dieser Wellenlänge ist (konkret z.B.: Absorption <<10% pro mm Materialtiefe => γ<<1/cm; y: Lambert-Beer'scher Absorptionskoeffizient).
2) Die Impulsdauer des Lasers ist bevorzugt so gewählt, dass innerhalb der Wechselwirkungszeit kein wesentlicher Wärmetransport (Wärmediffusion) aus der Wechselwirkungszone heraus stattfinden kann (konkret z.B.: τ << d²/α, d: Fokusdurchmesser, τ Laserimpulsdauer, α: Wärmediffusionskonstante des Materials).
3) Die Pulsenergie des Lasers ist bevorzugt so gewählt, dass die Intensität in der Wechselwirkungszone, also in der Brennlinie eine induzierte Absorption erzeugt, welche zu einer lokalen Erwärmung des Materials entlang der Brennlinie führt, welche wiederum zu einer Rissbildung entlang der Brennlinie infolge des in das Material eingebrachten thermischen Stresses führt.
4) Die Polarisation des Lasers beeinflusst sowohl die Wechselwirkung an der Oberfläche (Reflektivität), als auch die Art der Wechselwirkung innerhalb des Materials bei der induzierten Absorption. Die induzierte Absorption kann über induzierte, freie Ladungsträger (typischerweise Elektronen) stattfinden, entweder nach thermischer Anregung, oder über Multiphoton-Absorption und innere Photoionisation, oder über direkte Feldionisation (Feldstärke des Lichtes bricht Elektronenbindung direkt). Die Art der Erzeugung der Ladungsträger kann z.B. über den sog. Keldysh-Parameter (Referenz) beurteilt werden, das spielt aber für die erfindungsgemäße Anwendung der Methode keine Rolle. Wichtig kann bei bestimmten (z.B. doppelbrechenden Materialien) nur sein, dass die weitere Absorption/Transmission des Laserlichtes von der Polarisation abhängt, und somit die Polarisation über geeignete Optiken (Phasenplatten) vom Anwender für das Trennen des jeweiligen Materials günstig gewählt werden sollte, z.B. einfach in heuristischer Weise. Ist also das Material nicht optisch isotrop, sondern z.B. doppelbrechend, so wird auch die Propagation des Laserlichts im Material durch die Polarisation beeinflusst. So kann die Polarisation und die Orientierung des Polarisationsvektors so gewählt werden, dass sich wie gewünscht nur eine Brennlinie und nicht deren zwei ausbilden (ordentliche und außerordentliche Strahlen). Bei optisch isotropen Materialien spielt dies keine Rolle.
5) Weiterhin sollte die Intensität über die Impulsdauer, die Pulsenergie und den Brennliniendurchmesser so gewählt sein, dass keine Ablation oder Aufschmelzung, sondern nur eine Rissbildung im Gefüge des Festkörpers erfolgt. Diese Anforderung ist für typische Materialien wie Glas oder transparenten Kristallen am leichtesten zu erfüllen mit gepulsten Lasern im Sub-Nanosekunden-Bereich, insbesondere also mit Pulsdauern von z.B. zwischen 10 und 100 ps. Siehe hierzu auch Figur 1: Über Skalenlängen von etwa einem Mikrometer (0.5 bis 5.0 Mikrometer, vgl. Bildmitte) wirkt für schlechte Wärmeleiter wie beispielsweise Gläser die Wärmeleitung bis in den Sub-Mikrosekundenbereich (siehe den Bereich zwischen beiden Linien), während für gute Wärmeleiter wie Kristalle und Halbleiter die Wärmeleitung schon ab Nanosekunden wirksam wird.

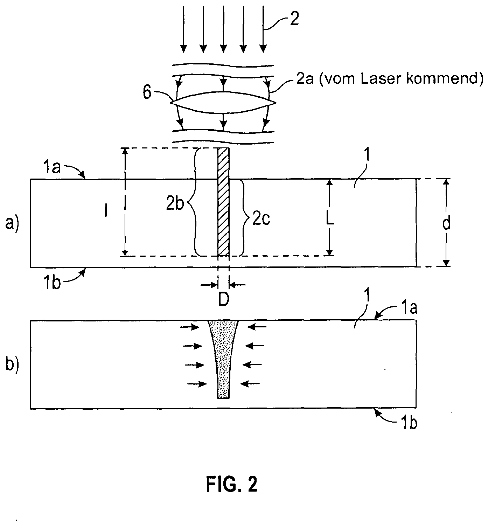

Der wesentliche Prozess zur erfindungsgemäßen, vertikal zur Substratebene ausgedehnten Rissbildung im Material ist mechanischer Stress, der die Gefügefestigkeit des Materials übersteigt (Druckfestigkeit in MPa). Der mechanische Stress wird hier über schnelle, inhomogene Erwärmung (thermisch induzierter Stress) durch die Laserenergie erreicht. Die Rissbildung gemäß der Erfindung startet, eine entsprechende Positionierung des Substrats realtiv zur Brennlinie vorausgesetzt (siehe nachfolgend) natürlicherweise an der Oberfläche des Substrats, da dort die Verformung am höchsten ist. Das liegt daran, dass im Halbraum über der Oberfläche kein Material ist, welches Kräfte aufnehmen kann. Dieses Argument gilt auch für Materialien mit gehärteten oder vorgespannten Oberflächen, solange die Dicke der gehärteten oder vorgespannten Schicht groß ist gegenüber dem Durchmesser des schlagartig erhitzten Materials entlang der Brennlinie. (Siehe hierzu auch die nachfolgend noch beschriebene Figur 2.)

Die Art der Wechselwirkung kann über die Fluenz (Energiedichte in Joule pro cm²) und die Laserimpulsdauer bei gewähltem Brennliniendurchmesser so eingestellt werden, dass 1.) vorzugsweise keine Schmelze an der Oberfläche oder im Volumen und 2.) vorzugsweise keine Ablation mit Partikelbildung an der Oberfläche stattfindet. In den im wesentlichen transparenten Materialien sind mehrere Arten der induzierten Absorption bekannt:
a) In Halbleitern und Isolatoren mit niedriger Bandlücke wird über z.B. eine geringe Restabsorption (durch Spuren von Verunreinigungen im Material oder durch bei der Temperatur vor der Laserbearbeitung schon thermisch angeregte Ladungsträger) eine rasche Aufwärmung innerhalb eines ersten Bruchteils der Laserimpulsdauer zu thermischer Anregung von weiteren Ladungsträgern führen, was wiederum zu einer erhöhten Absorption und in der Folge zu einem lawinenartigen Anwachsen der Laserabsorption in der Brennlinie führt.
b) In Isolatoren wird bei genügend hoher Lichtintensität eine Photoabsorption über eine nichtlinear-optische Wechselwirkung mit den Atomen der Materials zu einer Ionisation, und damit wiederum zur Erzeugung freier Ladungsträger und in der Folge zu einer erhöhten linearen Absorption des Laserlichts führen.

Nachfolgend wird die Erzeugung der Geometrie einer gewünschten Trennfläche (Relativbewegung zwischen Laserstrahl und Substrat entlang einer Linie auf der Substratoberfläche) beschrieben.

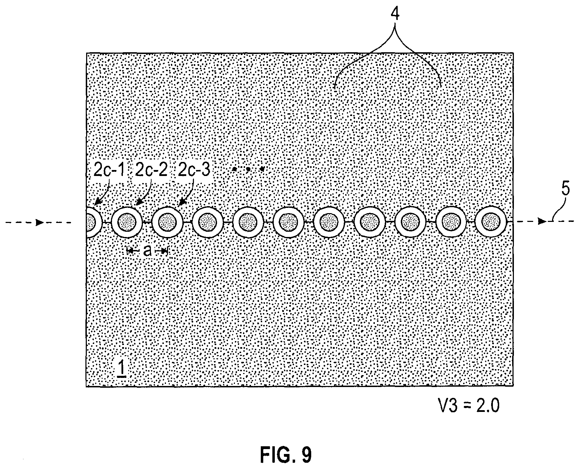

Die erfindungsgemäße Wechselwirkung mit dem Material erzeugt pro Laserpuls eine einzelne, durchgehende (in Richtung senkrecht zur Substratoberfläche gesehen) Risszone im Material entlang einer Brennlinie. Für das vollständige Durchtrennen des Materials wird eine Abfolge dieser Risszonen pro Laserpuls so eng aneinander entlang der gewünschten Trennlinie gesetzt, dass sich eine laterale Verbindung der Risse zu einer gewünschten Rissfläche/Kontur im Material ergibt. Dafür wird der Laser mit einer bestimmten Folgefrequenz gepulst. Spotgröße und Abstand sind so gewählt, dass an der Oberfläche entlang der Line der Laserspots eine gewünschte, gerichtete Rissbildung einsetzt. Der Abstand der einzelnen Risszonen entlang der gewünschten Trennfläche ergibt sich aus der Bewegung der Brennlinie relativ zum Material innerhalb der Zeitspanne von Laserpuls zu Laserpuls. Siehe hierzu auch die nachfolgend noch beschriebene Fig. 9.

Zur Erzeugung der gewünschten Trennfläche im Material kann entweder das gepulste Laserlicht mit einer parallel zur Substratebene (und ggf. auch senkrecht dazu) beweglichen optischen Anordnung über das stationäre Material bewegt werden, oder das Material selbst wird mit einer beweglichen Aufnahme an der stationären optischen Anordnung so vorbei bewegt, dass die gewünschte Trennline ausgeformt wird. Die Orientierung der Brennlinie zur Oberfläche des Materials, ob senkrecht oder unter einem Winkel 90°-β zur Oberfläche, kann entweder fest gewählt sein, oder über eine drehbare optische Anordnung (nachfolgend vereinfacht auch als Optik bezeichnet) und/oder einen drehbaren Strahlweg des Lasers entlang der gewünschten Trennlinie geändert werden.

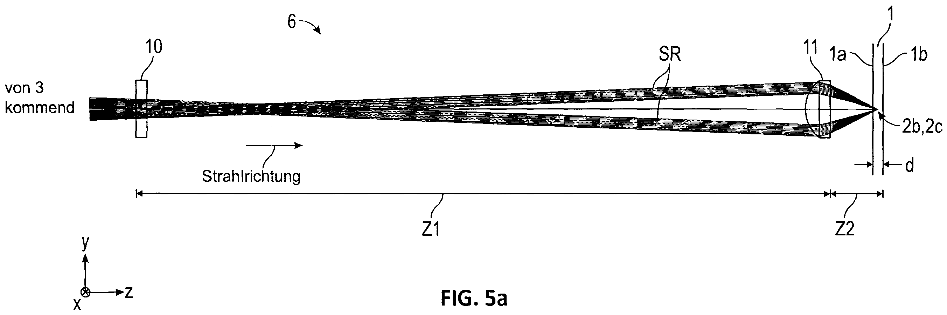

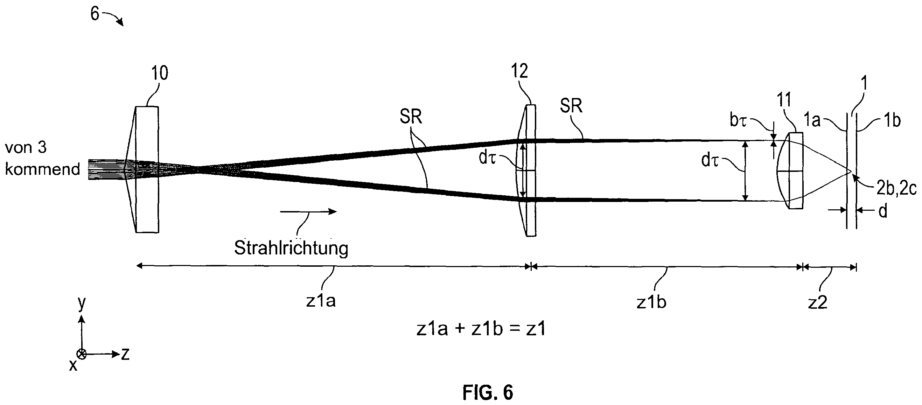

Insgesamt kann die Brennlinie zur Ausformung der gewünschten Trennlinie in bis zu fünf getrennt beweglichen Achsen durch das Material geführt werden: zwei Raumachsen (x,y), die den Einstechpunkt der Brennlinie in das Material festlegen, zwei Winkelachsen (theta, phi), die die Orientierung der Brennlinie vom Einstechpunkt in das Material hinein festlegen, und eine weitere Raumachse (z', nicht unbedingt orthogonal zu x, y), welche festlegt, wie tief die Brennlinie vom Einstechpunkt an der Oberfläche in das Material hineinreicht. Zur Geometrie im kartesischen Koordinatensystem (x,y,z) siehe auch z.B. die nachfolgend beschriebenen Figuren 5a und 6. Im Falle des senkrechten Einfalls des Laserstrahls auf die Substratoberfläche (β = 0°) gilt z=z'.

Hierbei bestehen in der Regel Beschränkungen, die durch die Optik und die Laserparameter gegeben sind: die Orientierung der Winkel in theta und phi kann nur soweit erfolgen, als die Brechung des Laserlichtes im Material dies zulässt (kleiner als der Winkel der Totalreflexion im Material), und die Eindringtiefe der Laserbrennlinie ist beschränkt durch die verfügbare Laserpulsenergie und die demgemäß gewählte Laseroptik, die nur eine Länge der Brennlinie ausformt, welche mit der verfügbaren Laserpulsenergie die erfindungsgemäßen Risszone erzeugen kann.

Eine mögliche Ausführung zur Bewegung der Brennlinien in allen fünf Achsen kann z.B. darin bestehen, das Material auf einem angetriebene Achstisch in den Koordinaten x,y zu bewegen, während die Brennline über einen Galvoscanner und eine nicht-telezentrische F-Theta-Linse im Feld der Linse relativ zur Linsenmitte in den Koordinaten x',y' bewegt und um die Winkel theta, phi verkippt wird. Die Koordinaten x und x' sowie y und y' können so verrechnet werden, dass die Brennline auf den gewünschte Auftreffpunkt der Materialoberfläche gerichtet ist. Galvoscanner und F-Theta-Linse sind weiterhin auf einer zur x,y-Ebene des Achstisches orthogonalen z-Achse befestigt, welche die Lage der Brennline senkrecht zum Material bestimmt (Tiefe der Brennlinie im Material).
Nachfolgend wird der letzte Schritt des Auftrennens des Substrats in die mehreren Teile beschrieben (Separation bzw. Auseinzeln).
Die Separation des Materials entlang der erzeugten Rissfläche/kontur erfolgt entweder durch Eigenspannung des Materials, oder durch eingebrachte Kräfte, z.B. mechanisch (Zug) oder thermisch (ungleichförmige Erwärmung/Abkühlung). Da erfindungsgemäß kein Material ablatiert wird, gibt es in der Regel zunächst keinen durchgehenden Spalt im Material, sondern nur eine hoch gestörte Bruchfläche (Mikrorisse), die in sich verzahnt und u.U. noch durch Brücken verbunden ist. Durch die nachfolgend eingebrachten Kräfte werden über laterales (parallel zur Substratebene erfolgendes) Risswachstum die verbliebenen Brücken getrennt und die Verzahnung überwunden, sodass sich das Material entlang der Trennfläche separieren lässt.
Nachfolgend werden die wesentlichen Merkmale eines erfindungsgemäßen Verfahrens sowie einer erfindungsgemäßen Vorrichtung anhand der Patentansprüche beschrieben.
Anspruch 1 beschreibt die wesentlichen Merkmale eines erfindungsgemäßen Verfahrens, Anspruch 12 beschreibt die wesentlichen Bauelemente einer zum Durchführen des erfindungsgemäßen Verfahrens ausgebildeten Vorrichtung.

Die in den Ansprüchen 1 und 12 beschriebene, vermittels der optischen Anordnung erzeugte Laserstrahlbrennlinie wird vorangehend und nachfolgend alternativ vereinfacht auch als Brennlinie des Laserstrahls bezeichnet. Erfindungsgemäß wird das Substrat durch die erfindungsgemäße Rissbildung (induzierte Absorption entlang der senkrecht zur Substratebene ausgedehnten Brennlinie) in der Substratebene gesehen in die mehreren Teil aufgetrennt bzw. ausgeeinzelt. Die erfindungsgemäße Rissbildung erfolgt somit senkrecht zur Substratebene in das Substrat bzw. in das Innere des Substrats hinein (Längsrissbildung). Wie bereits beschrieben, müssen in der Regel eine Vielzahl einzelner Laserstrahlbrennlinien entlang einer Linie auf der Substratoberfläche in das Substrat eingebracht werden, damit die einzelnen Teile des Substrats voneinander separiert werden können. Hierzu kann entweder das Substrat parallel zur Substratebene relativ zum Laserstrahl bzw. zur optischen Anordnung verfahren werden oder umgekehrt die optische Anordnung parallel zur Substratebene relativ zum ortsfest angeordneten Substrat bewegt werden.
Vorteilhafterweise werden erfindungsgemäß zusätzlich die Merkmale mindestens eines der abhängigen Verfahrens- oder Vorrichtungsansprüche realisiert. Dabei können auch die Merkmale mehrere abhängiger Ansprüche in beliebiger Kombination realisiert werden.

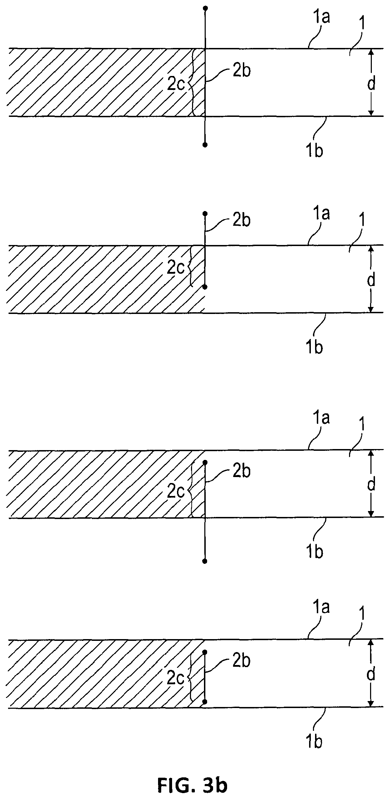

Weitere vorteilhafterweise realisierbare Merkmale lassen sich die abhängigen Ansprüche entnehmen (siehe auch nachfolgend noch beschriebene Figur 3b). Der ausgedehnte Abschnitt der induzierten Absorption (also z.B. senkrecht zur Substratebene eingebrachte Risslänge) kann sich somit sowohl von einem Punkt im Inneren des Substrats entlang des ausgedehnten Abschnitts der induzierten Absorption bis hin zur rückseitigen Oberfläche des Substrats erstrecken oder auch z.B. von der vorderseitigen Oberflächen des Substrats bis hin zu einem Punkt im Inneren des Substrats. Die Schichtdicke d wird dabei jeweils senkrecht zu den beiden sich gegenüberliegenden Substratoberflächen des flächigen Substrats gemessen (auch bei schrägem Einstrahlen der Laserstrahlung unter einem Winkel β > 0° zur Normalen auf die Substratoberfläche, also bei schrägem Einfall). Bei sämtlichen anderen Ansprüchen inkludieren die genannten Bereichsgrenzen jeweils den angegebenen oberen und unteren Grenzwert.

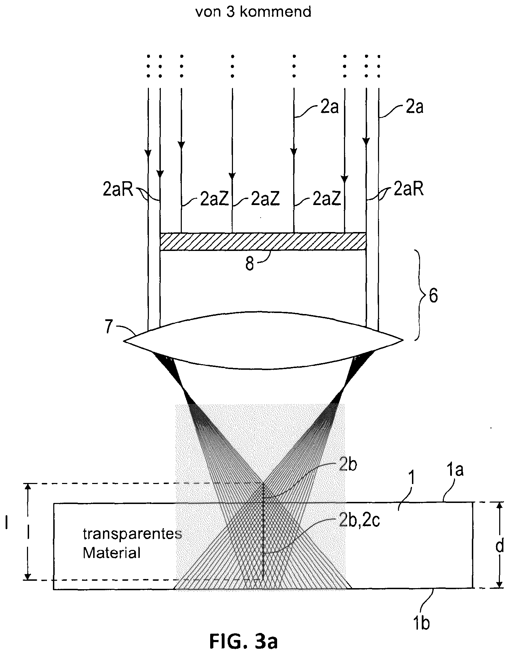

Vorteilhafte Einstrahlrichtungen gemäß des erfindungsgemäßen Verfahrens zum Einstrahlen des Laserstrahls auf das Substrat (die dann auch die Orientierung der Laserstrahlbrennlinie relativ zur Substratebene definieren) lassen sich Anspruch 9 entnehmen.
Die zur endgültigen Separation bzw. zum Auseinzeln des Substrats in seine mehreren Teile ggf. noch notwendigen zusätzlichen Verfahrensschritte sind in den abhängigen Ansprüchen 10 und 11 beschrieben. Wie bereits erwähnt wird entweder das Substrat relativ zur optischen Anordnung (samt Laser) oder die optische Anordnung (samt Laser) relativ zum Substrat bewegt. Die im Anspruch 11 angesprochene Rissbildung ist dabei (im Gegensatz zur erfindungsgemäß wesentlichen, induzierten Rissbildung) als Querriss, also als eine laterale Rissbildung in einer in der Ebene des Substrats liegenden Richtung zu verstehen (entsprechend des Verlaufs der Linie, entlang derer das Substrat aufgetrennt werden soll). Vorteilhafte Weiterbildungen einer erfindungsgemäßen Vorrichtung gemäß Anspruch 12 die insbesondere verschiedene mögliche Ausgestaltungsformen der optischen Anordnung zum Erzeugen und Positionieren der Laserstrahlbrennline beschreiben, lassen sich den abhängigen Ansprüchen 13 bis 16 entnehmen. Siehe hierzu auch die nachfolgenden Ausführungsbeispiele bzw. die Figuren 3a, 4, 5a, 5b, 6, 7 und 8. Die konvexe Linse gemäß Anspruch 12 kann insbesondere eine plankonvexe Linse sein.
Wesentliche erfindungsgemäße Verwendungen (weitere sind nachfolgend noch beschrieben) lassen sich Anspruch 17 entnehmen.

Gemäß Anspruch 18 wird weiter beansprucht: Ein Gegenstand aus Glas mit einer oder mehreren Fläche(n) (insbesondere: einer oder mehreren Oberfläche(n)). Entlang mindestens einer der einen oder mehreren Fläche(n) ist/sind jeweils eine Mehrzahl von Materialmodifikationen vorhanden, wobei jede der Materialmodifikationen eine Länge im Bereich zwischen 0.1 mm und 100 mm und einen mittleren Durchmesser im Bereich zwischen 0.5 µm und 5 µm aufweist.

Gemäß Anspruch 19 wird weiter beansprucht: Ein Gegenstand aus Glas mit einer oder mehreren Fläche(n) (insbesondere: einer oder mehreren Oberfläche(n)). Entlang mindestens einer der einen oder mehreren Fläche(n) ist/sind jeweils eine Mehrzahl von Materialmodifikationen vorhanden. Jede der Materialmodifikationen weist ein Verhältnis V3 = α/δ des mittleren Abstands a der unmittelbar benachbarten Materialmodifikationen und des mittleren Durchmessers δ einer Laserstrahl-Brennlinie, die die Materialmodifikationen erzeugt hat, von ungefähr gleich 2.0 auf.
Die vorliegende Erfindung weist im Vergleich zu den aus dem Stand der Technik bekannten Verfahren bzw. Vorrichtungen eine Reihe wesentlicher Vorteile auf.

Zunächst erfolgt gemäß der Erfindung die Schnittbildung ohne Partikelbildung, ohne Schmelzränder, mit minimaler Rissbildung am Rand, ohne merklichen Schnittspalt (somit ohne Verlust an Material des Substrats) und mit geraden Schnittkanten. Die Schnittbildung kann dabei entweder senkrecht (zur Substratebene gesehen) oder unter einem vom Anwender gewünschten Winkel β relativ zur Substratnormalen eingestellt werden.

Erfindungsgemäß ist keine sehr hohe mittlere Laserleistung notwendig, trotzdem lassen sich vergleichsweise hohe Trenngeschwindigkeiten erzielen. Wesentlich ist dabei, dass die Erfindung pro Laserpuls (oder pro Burstimpuls) eine Laserstrahlbrennlinie (und nicht lediglich einen nicht bzw. nur sehr lokal ausgedehnten Brennpunkt) erzeugt. Dazu werden die nachfolgend noch im einzelnen dargestellten Laseroptiken eingesetzt. Die Brennlinie bestimmt so die Zone der Wechselwirkung zwischen Laser und Substrat. Fällt die Brennlinie zumindest abschnittsweise (in Tiefenrichtung gesehen) in das zu trennende Substratmaterial, so können die Laserparameter so gewählt werden, dass eine Wechselwirkung mit dem Material stattfindet, die erfindungsgemäß eine Risszone entlang der gesamten Brennlinie (bzw. entlang des gesamten ausgedehnten Abschnitts der Laserstrahlbrennlinie, die in das Substrat fällt) erzeugt. Wählbare Laserparameter sind beispielsweise die Wellenlänge des Lasers, die Impulsdauer des Lasers, die Pulsenergie des Lasers und auch ggf. die Polarisation des Lasers.

Weitere Vorteile, die das erfindungsgemäße Verfahren gegenüber beispielsweise dem mechanischen Ritzen und Brechen aufweist sind neben der fehlenden (oder zumindest minimalen) Partikelbildung, dass sich im Gegensatz zu einer mechanischen Ritzlinie ein hohes Aspektverhältnis (Breite zu Tiefe) erzielen lässt. Während beim mechanischen Ritzen und Brechen die Bruchlinie in das Material hinein über weitgehend unsteuerbares Risswachstum erzeugt wird, erfolgt erfindungsgemäß ein Trennen unter einem sehr genau einstellbaren Winkel β zur Substratnormalen. Erfindungsgemäß besteht somit keine Richtungsabhängigkeit der Schnittrichtung und Schrägschnitte sind ohne weiteres möglich.

Auch im Vergleich zum Erzeugen punktförmiger (fokussierter) Defekte durch punktförmiges Fokussieren eines Lasers auf die Oberfläche oder auch ins Innere des Substratmaterials und einem anschließenden Brechen nach Setzen solcher punktförmiger Foki in unterschiedlichen Materialtiefen hat die vorliegende Erfindung insbesondere den Vorteil, dass ein deutlich höheres Aspektverhältnis des Schnitts erzielt werden kann. Probleme solcher bekannter Verfahren, die aufgrund wenig gerichteter Rissbildung insbesondere bei dickeren Substraten auftreten, werden somit vermieden. Auch ist die Bearbeitungsgeschwindigkeit insbesondere bei dickeren Substraten (bei denen an einer definierten Position in der Substratebene ein vielfaches Setzen punktförmiger Beschädigungen in unterschiedlichen Substrattiefen von der Oberseite bis hin zur Unterseite des Substrats notwendig ist) um ein Vielfaches erhöht.

Eine Ablation an der Oberfläche, Gratbildungen an der Oberfläche und Partikelbildungen werden vermieden (letzteres insbesondere wenn die Lage der Brennlinie relativ zum Substrat so eingestellt wird, dass das erfindungsgemä-βe Verfahren von der Oberfläche des Substrats ausgehend ins Innere des Substrats für die erfindungsgemäße ausgedehnte induzierte Absorption und Rissbildung sorgt). In diesem Fall findet somit die erste (gewollte) Beschädigung direkt an der Oberfläche statt und setzt sich auf definierte Art und Weise entlang der Rissbildungszone durch induzierte Absorption in die Substrattiefe fort.

Erfindungsgemäß lassen sich unterschiedliche Materialien, insbesondere Glasscheiben, Saphirscheiben, Halbleiterwafer, ... bearbeiten. Dabei können sowohl einzelne Schichten entsprechender Materialien als auch Schichtverbünde (Schichtstapel mehrerer einzelner Substratschichten) bearbeitet werden. Die Brennlinie kann dabei so positioniert und ausgerichtet werden, dass auch im Inneren eines Schichtstapels lediglich eine definierte Schicht aufgetrennt wird. Unterschiedliche Sandwichbauweisen von Schichtstapeln können bearbeitet werden: Glas-Luft-Glas-Verbünde, Glas-Folie-Glas-Verbünde, Glas-Glas-Verbünde. Somit ist das selektive Schneiden einzelner Lagen auch innerhalb eines Stapels ebenso möglich wie das Durchtrennen von Zwischenschichten (beispielsweise Folien oder Klebefilm).

Auch können bereits beschichtete Materialien (z.B. AR beschichtet, TCO beschichtet) oder auch einseitig nicht transparent bedruckte Substrate erfindungsgemäß bearbeitet und aufgetrennt werden.

Erfindungsgemäß sind Freiformschnitte möglich, ohne dass die Geometrie durch die Rissbildung im Substrat beschränkt ist. Somit können nahezu beliebige Freiformschnitte in transparente Medien eingebracht werden (die Schnittrichtung ist nicht richtungsabhängig). Somit können schräge Schnitte in das Substrat eingebracht werden, z.B. mit Anstellwinkeln, die, ausgehend von der Normalen, Winkel bis β = 30° oder β = 45° aufweisen.

Erfindungsgemäß ist ein Schneiden praktisch ohne Schnittspalt möglich: Lediglich eine Materialschädigung wird erzeugt, die in der Regel im Bereich zwischen 1 und 10 µm Ausdehnung liegt. Dabei wird insbesondere kein Schnittverlust in Bezug auf Material oder Fläche generiert. Dies ist insbesondere beim Schneiden von Halbleiterwafern vorteilhaft, da Schnittspaltverluste die aktiv nutzbare Fläche des Wafers verringern würden. Durch das erfindungsgemäße Verfahren des Brennlinienschneidens ergibt sich somit eine erhöhte Flächenausbeute. Das Fehlen des Materialverlustes ist insbesondere auch beim Schneiden von Edelsteinen (z.B. Diamant) vorteilhaft: Ist das Einsatzgebiet der vorliegenden Erfindung vorzugsweise das Schneiden bzw. Auftrennen flächiger Substrate, so können erfindungsgemäß auch nicht-flächige Substrate oder Werkstücke bearbeitet werden.

Das erfindungsgemäße Verfahren kann insbesondere auch im Inline-Betrieb von Produktionsprozessen eingesetzt werden. Besonders vorteilhaft geschieht dies bei Produktionsprozessen, die in einem Rolle-zu-Rolle-Verfahren ablaufen.

Erfindungsgemäß können Einzelpulslaser ebenso eingesetzt werden, wie Laser, die Burstimpulse generieren. Grundsätzlich ist auch der Einsatz von Lasern im Dauerstrichbetrieb denkbar.

Folgende spezifische Anwendungsgebiete ergeben sich beispielhaft:
1. Auftrennen von Saphir-LED mit der Möglichkeit den Saphirwafer ganz oder teilweise zu schneiden. Dabei kann mit dem erfindungsgemäßen Verfahren die Metallschicht ebenfalls mit durchtrennt werden, dies in einem einzigen Schritt.
2. Das Auseinzeln von Halbleiterwafern ist möglich, ohne das Tape zu beschädigen. Dazu wird die Brennlinie nur teilweise ins Innere des Substratmaterials gelegt, sodass sie an der Oberfläche beginnt und vor der getapten Folie (auf der dem Laser abgewandten rückseitigen Oberfläche des Substrats) aufhört: Beispielsweise ca. 10 % des Materials werden nicht getrennt. Die Folie bleibt somit intakt weil die Brennlinie vor der Folie "stoppt". Der Halbleiterwafer kann dann nachfolgend über mechanische Kräfte (oder thermische Kräfte, siehe nachfolgendes Bespiel mit dem CO₂-Laser) über die verbleibenden 10 % separiert werden.
3. Schneiden von beschichteten Materialien: Beispiele sind hier Bragg-Reflektoren (DBR) oder auch metallbeschichtete Saphirwafer. Auch prozessierte Siliziumwafer, auf welche bereits die aktiven Metall- oder Metalloxidschichten aufgebracht worden sind, können erfindungsgemäß geschnitten werden. Weitere Bespiele sind das Bearbeiten von ITO oder von AlZnO, mit denen Substrate beschichtet sind, welche beispielsweise zur Herstellung von Touchscreens oder Smart-Windows benötigt werden. Aufgrund der (im Vergleich zu ihrem Durchmesser) sehr ausgedehnten Brennlinie wird ein Teil der Brennlinie die Metallschicht (oder eine andere Schicht) entfernen, der Rest der Brennlinie dringt in das transparente Material ein und schneidet dies. Dies hat insbesondere auch den Vorteil, dass entsprechend beschichtete Substrate in einem einschrittigen Prozess, also in einem Prozess, bei dem Beschichtung und Substrat in einem Vorgang getrennt werden, aufgetrennt werden können.
4. Besonders vorteilhaft ist erfindungsgemäß das Schneiden von sehr dünnen Materialien (beispielsweise Substrate aus Glas mit Dicken kleiner 300 µm, kleiner 100 µm oder sogar kleiner 50 µm). Diese können mit konventionellen mechanischen Verfahren nur sehr aufwendig bearbeitet werden. Allerdings entstehen bei den mechanischen Verfahren Kanten, Schäden, Risse, Abplatzungen, welche die Substrate entweder unbrauchbar machen können oder aufwendige Nachbearbeitungen erforderlich machen. Demgegenüber bietet das Schneiden gemäß der vorliegenden Erfindung bei dünnen Materialien insbesondere die Vorteile des Vermeidens von Kantenschäden und Rissen, sodass keine Nachbearbeitung notwendig ist, von sehr hohen Schnittgeschwindigkeiten (> 1 m/s) von einer hohen Ausbeute und vom Durchführen des Prozesses in einem einzigen Schritt.
5. Das erfindungsgemäße Verfahren kann insbesondere auch bei der Herstellung von dünnen Foliengläsern eingesetzt werden, die mit einem kontinuierlich laufenden Glasziehprozess hergestellt werden, um die Folienränder zu trimmen.

Nachfolgend wird die vorliegende Erfindung nun anhand einiger auf dem Vorbeschriebenen aufbauenden Ausführungsbeispielen beschrieben. Dabei zeigen:
Figur 1 den Zusammenhang zwischen der Wärmediffusionskonstante α, der linearen Ausdehnung im Material (Skalenlänge, hier mit d bezeichnet) sowie einer Zeitdauer τ wie beispielsweise der Laserimpulsdauer für unterschiedliche Materialien.
Figur 2 das Prinzip der erfindungsgemäßen Positionierung einer Brennlinie, also die Bearbeitung eines für die Laserwellenlänge transparenten Materials aufgrund der induzierten Absorption entlang der Brennlinie.
Figur 3a eine erste erfindungsgemäß verwendbare optische Anordnung.
Figur 3b unterschiedliche Möglichkeiten der Bearbeitung des Substrats durch unterschiedliche Positionierung der Laserstrahlbrennlinie relativ zum Substrat.
Figur 4 eine zweite erfindungsgemäß verwendbare optische Anordnung.
Figuren 5a und 5b eine dritte erfindungsgemäß verwendbare optische Anordnung.
Figur 6 ein vierte erfindungsgemäß verwendbare optische Anordnung.
Figur 7 einen erfindungsgemäßen Aufbau zur Durchführung des Verfahrens am Beispiel der ersten verwendbaren optischen Anordnung aus Figur 3a (anstelle dieser optischen Anordnung können auch die weiteren gezeigten optischen Anordnungen der Figuren 4, 5 und 6 im Rahmen der gezeigten Anordnung verwendet werden, indem die in Figur 7 gezeigte optische Anordnung 6 durch eine dieser Anordnungen ersetzt wird).
Figur 8 die erfindungsgemäße Erzeugung einer Brennlinie im Detail.
Figur 9 ein Mikroskopbild der Oberfläche (Aufsicht auf die Substratebene) einer erfindungsgemäß bearbeiteten Glasscheibe.

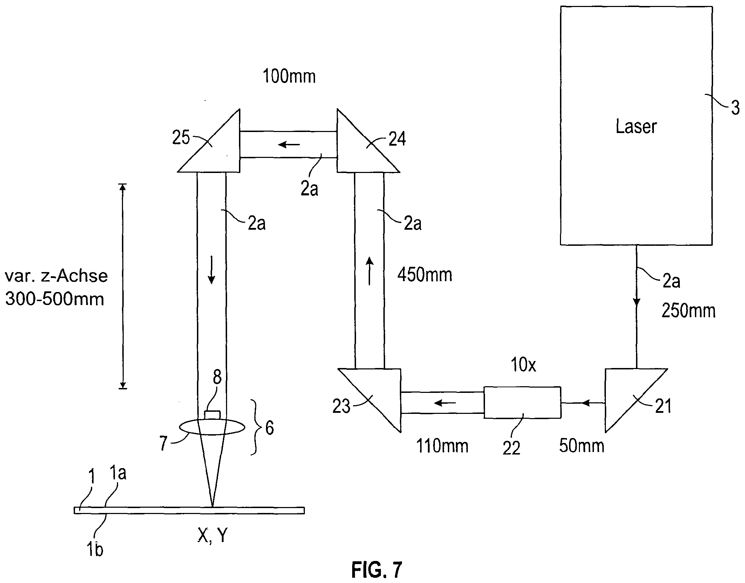

Figur 2 skizziert die grundlegende Vorgehensweise des erfindungsgemäßen Bearbeitungsverfahrens. Ein vom hier nicht gezeigten Laser 3 (vgl. Figur 7) emittierter Laserstrahl 2, der strahleingangsseitig der optischen Anordnung 6 mit dem Bezugszeichen 2a bezeichnet ist, wird auf die optische Anordnung 6 der Erfindung (siehe nachfolgende Ausführungsbeispiele dazu) eingestrahlt. Die optische Anordnung 6 formt aus dem eingestrahlten Laserstrahl strahlausgangsseitig über einen definierten Ausdehnungsbereich entlang der Strahlrichtung (Länge I der Brennlinie) eine ausgedehnte Laserstrahlbrennlinie 2b. Zumindest abschnittsweise die Laserstrahlbrennlinie 2b der Laserstrahlung 2 überdeckend wird im Strahlengang nach der optischen Anordnung das zu bearbeitende, hier flächige Substrat 1 positioniert. Das Bezugszeichen 1a bezeichnet die der optischen Anordnung 6 bzw. dem Laser zugewandte Oberfläche des flächigen Substrats, das Bezugszeichen 1b die hierzu üblicherweise parallele, beabstandete rückseitige Oberfläche 1b des Substrats 1. Die Substratdicke (senkrecht zu den Flächen 1a und 1b, also zur Substratebene gemessen) ist hier mit dem Bezugszeichen d bezeichnet.

Wie Figur 2a zeigt, ist hier das Substrat 1 senkrecht zur Strahllängsachse und somit zur im Raum durch die optische Anordnung 6 hinter derselben erzeugten Brennlinie 2b ausgerichtet (das Substrat steht senkrecht auf der Zeichnungsebene) und entlang der Strahlrichtung gesehen relativ zur Brennlinie 2b so positioniert, dass die Brennlinie 2b in Strahlrichtung gesehen vor der Oberfläche 1a des Substrats beginnt und vor der Oberfläche 1b des Substrats, also noch innerhalb des Substrats, endet. Die ausgedehnte Laserstrahlbrennlinie 2b erzeugt somit (bei geeigneter Laserintensität entlang der Laserstrahlbrennlinie 2b, die durch die Fokussierung des Laserstrahls 2 auf einen Abschnitt der Länge I, also durch einen Linienfokus der Länge I sichergestellt wird) im Überdeckungsbereich der Laserstrahlbrennlinie 2b mit dem Substrat 1, also im Material des Substrats das von der Brennlinie 2b überstrichen wird, einen entlang der Strahllängsrichtung gesehen ausgedehnten Abschnitt 2c, entlang dessen eine induzierte Absorption im Material des Substrats erzeugt wird, die entlang des Abschnitts 2c eine Rissbildung im Material des Substrats induziert. Die Rissbildung erfolgt dabei nicht nur lokal, sondern über die gesamte Länge des ausgedehnten Abschnitts 2c der induzierten Absorption. Die Länge dieses Abschnitts 2c (also letztendlich die Länge der Überdeckung der Laserstrahlbrennlinie 2b mit dem Substrat 1) ist hier mit dem Bezugszeichen L versehen. Der mittlere Durchmesser bzw. die mittlere Ausdehnung des Abschnitts der induzierten Absorption (bzw. der Bereiche im Material des Substrats 1, die der Rissbildung unterzogen werden) ist hier mit dem Bezugszeichen D bezeichnet. Diese mittlere Ausdehnung D entspricht hier im wesentlichen dem mittleren Durchmesser δ der Laserstrahlbrennlinie 2b.

Wie Figur 2a zeigt, wird somit erfindungsgemäß für die Wellenlänge λ des Laserstrahls 2 transparentes Substratmaterial durch induzierte Absorption entlang der Brennlinie 2b erwärmt. Figur 2b skizziert, dass sich das erwärmte Material letztendlich ausdehnt, sodass eine entsprechend induzierte Spannung zur Mikrorissbildung gemäß der Erfindung führt, wobei die Spannung an der Oberfläche 1a am größten ist.

Nachfolgend werden konkrete optische Anordnungen 6, die zur Erzeugung der Brennlinie 2b eingesetzt werden können, sowie ein konkreter optischer Aufbau (Figur 7), in dem diese optischen Anordnungen eingesetzt werden können, beschrieben. Alle Anordnungen bzw. Aufbauten basieren dabei auf dem Vorbeschriebenen, sodass für identische oder sich in ihrer Funktion entsprechende Bauteile bzw. Merkmale jeweils identische Bezugszeichen verwendet werden. Nachfolgend werden daher jeweils nur die Unterschiede beschrieben.

Da die letztendlich zur Separation führende Trennfläche erfindungsgemäß von hoher Qualität (hinsichtlich Bruchfestigkeit, geometrischer Präzision, Rauigkeit und der Vermeidung von Nachbearbeitungserfordernissen) ist bzw. sein soll, sollten die einzelnen entlang der Trennlinie 5 auf der Oberfläche des Substrats zu positionierenden Brennlinien wie mit den nachfolgenden optischen Anordnungen beschrieben erzeugt werden (die optische Anordnung wird nachfolgend alternativ auch als Laseroptik bezeichnet). Die Rauigkeit ergibt sich dabei insbesondere aus der Spotgröße bzw. dem Spotdurchmesser der Brennlinie. Um bei gegebener Wellenlänger λ des Lasers 3 (Wechselwirkung mit dem Material des Substrats 1) eine geringe Spotgröße von beispielsweise 0.5 µm bis 2 µm erreichen zu können, sind in der Regel bestimmte Anforderungen an die numerische Apertur der Laseroptik 6 zu stellen. Diese Anforderungen werden durch die nachfolgend beschriebenen Laseroptiken 6 erfüllt.

Zum Erzielen der gewünschten numerischen Apertur muss zum einen die Optik bei gegebener Brennweite die nötige Öffnung aufweisen, gemäß den bekannten Formeln von Abbe (N.A. = n sin (theta), n: Brechzahl des zu bearbeitenden Glases, theta: halber Öffnungswinkel; und theta = arctan (D/2f); D: Öffnung, f: Brennweite). Zum anderen muss der Laserstrahl die Optik bis zur nötigen Öffnung ausleuchten, was typischerweise durch Strahlaufweitung mittels Aufweitteleskopen zwischen Laser und Fokussieroptik bewerkstelligt wird.

Die Spotgröße sollte dabei für eine gleichförmige Wechselwirkung entlang der Brennlinie nicht zu stark variieren. Dies kann z.B. dadurch sichergestellt werden (siehe Ausführungsbeispiel unten), dass die fokussierende Optik nur in einem schmalen, ringförmigen Bereich ausgeleuchtet wird, indem sich dann naturgemäß die Strahlöffnung und damit die numerische Apertur prozentual nur gering ändern.

Gemäß Figur 3a (Schnitt senkrecht zur Substratebene auf Höhe des Zentralstrahls im Laserstrahlenbündel der Laserstrahlung 2; auch hier erfolgt die Einstrahlung des Laserstrahls 2 senkrecht zur Substratebene, d.h. der Winkel β ist 0°, sodass die Brennlinie 2b bzw. der ausgedehnte Abschnitt der induzierten Absorption 2c parallel zur Substratnormalen ist) wird die vom Laser 3 emittierte Laserstrahlung 2a zunächst auf eine kreisförmige Blende 8, die für die verwendete Laserstrahlung vollständig intransparent ist, gerichtet. Die Blende 8 ist dabei senkrecht zur Strahllängsachse orientiert und auf den Zentralstrahl des gezeigten Strahlenbündels 2a zentriert. Der Durchmesser der Blende 8 ist so gewählt, dass die nahe des Zentrums des Strahlenbündels 2a bzw. des Zentralstrahls liegenden Strahlenbündel (hier mit 2aZ bezeichnet) auf die Blende auftreffen und von dieser vollständig absorbiert werden. Lediglich im äußeren Umfangsbereich des Strahlenbündels 2a liegende Strahlen (Randstrahlen, hier mit 2aR bezeichnet) werden aufgrund der im Vergleich zum Strahldurchmesser verringerten Blendengröße nicht absorbiert, sondern passieren die Blende 8 seitlich und treffen auf die Randbereiche des hier als sphärisch geschliffene, bi-konvexe Linse 7 ausgebildeten fokussierenden optischen Elements der optischen Anordnung 6.

Die auf den Zentralstrahl zentrierte Linse 6 ist hier bewusst als nichtkorrigierte, bi-konvexe fokussierende Linse in Form einer üblichen sphärisch geschliffenen Linse ausgebildet. Mit anderen Worten wird die sphärische Aberration einer solchen Linse bewusst ausgenutzt. Alternativ dazu können auch von ideal korrigierten Systemen abweichende Asphären oder Mehrlinser, die gerade keinen idealen Fokuspunkt, sondern eine ausgeprägte, langgestreckte Fokuslinie definierter Länge bilden, eingesetzt werden (also Linsen bzw. Systeme, die gerade keinen einzelnen Brennpunkt mehr aufweisen). Die Zonen der Linse fokussieren somit gerade in Abhängigkeit vom Abstand von der Mitte der Linse entlang einer Brennlinie 2b. Der Durchmesser der Blende 8 quer zur Strahlrichtung beträgt hier etwa 90 % des Durchmessers des Strahlbündels (Strahlbündeldurchmesser definiert durch die Ausdehnung bis zum Abfall auf 1/e) und ca. 75 % des Durchmessers der Linse der optischen Anordnung 6. Erfindungsgemäß wird somit die Brennlinie 2b einer nichtaberrationskorrigierten sphärischen Linse 7 genutzt, die durch Ausblenden der Strahlenbündel in der Mitte erzeugt wurde. Dargestellt ist der Schnitt in einer Ebene durch den Zentralstrahl, das vollständige dreidimensionale Bündel ergibt sich, wenn man die dargestellten Strahlen um die Brennlinie 2b rotiert.

Ein Nachteil dieser Brennlinie ist, dass die Bedingungen (Spotgröße, Intensität des Laser) entlang der Brennlinie, und somit entlang der gewünschten Tiefe im Material, sich ändern, und somit die gewünschte Art der Wechselwirkung (kein Schmelzen, induzierte Absorption, thermisch-plastische Verformung bis zur Rissbildung) sich ggf. nur innerhalb eines Teiles der Brennlinie einstellen lässt. Das bedeutet umgekehrt, dass ggf. nur ein Teil des eingestrahlten Laserlichts in der gewünschten Weise absorbiert wird. Somit wird zum einen der Wirkungsgrad des Verfahrens (nötige mittlere Laserleistung für gewünschte Trenngeschwindigkeit) verschlechtert, zum anderen wird Laserlicht u.U. an unerwünschte, tieferliegende Orte (an das Substrat anhaftende Teile oder Schichten, oder an die Substrataufnahme) transmittiert und wechselwirkt dort unerwünscht (Erwärmung, Streuung, Absorption, unerwünschte Modifikation).

Figur 3b zeigt (nicht nur für die optische Anordnung in Figur 3a, sondern grundsätzlich auch für alle anderen verwendbaren optischen Anordnungen 6), dass die Laserstrahlbrennlinie 2b durch geeignete Positionierung und/oder Ausrichtung der optischen Anordnung 6 relativ zum Substrat 1 sowie durch geeignete Wahl der Parameter der optischen Anordnung 6 unterschiedlich positioniert werden kann: Wie die erste Zeile aus Figur 3b skizziert, kann die Länge I der Brennlinie 2b so eingestellt werden, dass sie die Substratdicke d (hier um den Faktor 2) übertrifft. Platziert man das Substrat 1 somit in Strahllängsrichtung gesehen mittig zur Brennlinie 2b, so wird ein ausgedehnter Abschnitt induzierter Absorption 2c über die gesamte Substratdicke d erzeugt.

Im in Figur 3b zweite Zeile gezeigten Fall wird eine Brennlinie 2b der Länge I erzeugt, die in etwa der Ausdehnung des Substrats d entspricht. Da das Substrat 1 relativ zur Linie 2 so positioniert wird, dass die Linie 2b in einem Punkt vor, also außerhalb des Substrats beginnt, ist die Länge L des ausgedehnten Abschnitts induzierter Absorption 2c (der sich hier von der Oberfläche des Substrats bis in eine definierte Substrattiefe, jedoch nicht bis zur rückseitigen Oberfläche 1b erstreckt) hier kleiner als die Länge I der Brennlinie 2b. Die dritte Zeile in Figur 3b zeigt den Fall, bei dem das Substrat 1 entlang der Strahlrichtung gesehen partiell vor dem Beginn der Brennlinie 2b positioniert wird, sodass auch hier für die Länge I der Linie 2b I > L gilt (L = Ausdehnung des Abschnitts induzierter Absorption 2c im Substrat 1). Die Brennlinie beginnt somit im Inneren des Substrats und erstreckt sich über die rückseitige Oberfläche 1b bis außerhalb des Substrats. Die vierte Zeile in Figur 3b zeigt schließlich den Fall, bei dem die erzeugte Brennlinienlänge I kleiner als die Substratdicke d ist, sodass - bei zentrischer Positionierung des Substrats relativ zur Brennlinie in Einstrahlrichtung gesehen - die Brennlinie hier nahe der Oberfläche 1a im Inneres des Substrats beginnt und naher der Oberfläche 1b im Inneren des Substrats endet (I = 0.75 - d).

Erfindungsgemäß ist es dabei besonders vorteilhaft, die Brennlinienpositionierung so zu realisieren, dass mindestens eine der Oberflächen 1a, 1b von der Brennlinie überstrichen wird, der Abschnitt der induzierten Absorption 2c somit an mindestens einer Oberfläche beginnt. Auf diese Art und Weise lassen sich, durch Vermeidung von Ablation, Grat- und Partikelbildung an der Oberfläche nahezu ideale Schnitte erzielen.

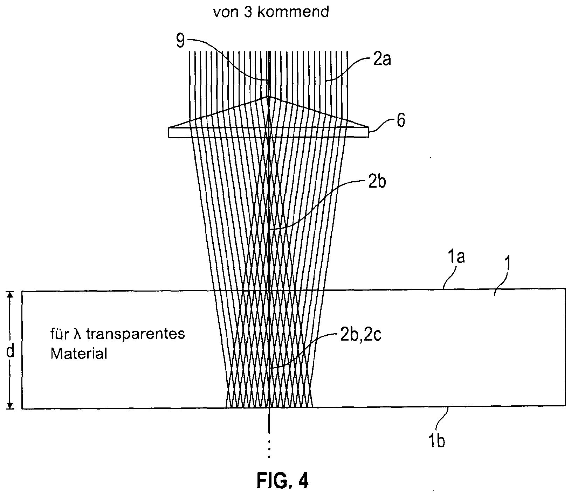

Figur 4 zeigt eine weitere erfindungsgemäß einsetzbare optischen Anordnung 6. Der grundsätzliche Aufbau folgt dem in Figur 3a beschriebenen, so dass nachfolgend lediglich die Unterschiede beschrieben werden. Die gezeigte optische Anordnung basiert auf der Idee, zur Bildung der Brennlinie 2b eine Optik mit einer nicht-sphärischen Freifläche einzusetzen, die so geformt ist, dass eine Brennlinie definierter Länge I gebildet wird. Hierzu können als optische Elemente der optischen Anordnung 6 Asphären eingesetzt werden. Beispielsweise wird in Figur 4 ein sogenanntes Kegelprisma, das oft auch als Axicon bezeichnet wird, eingesetzt. Ein Axicon ist eine spezielle, konisch geschliffene Linse, die eine Punktquelle auf eine Linie entlang der optischen Achse bildet (oder auch einen Laserstrahl ringförmig transformiert). Der Aufbau eines solchen Axicons ist dem Fachmann grundsätzlich bekannt; der Kegelwinkel beträgt hier beispielsweise 10°. Das hier mit dem Bezugszeichen 9 bezeichnete Axicon ist mit seiner Kegelspitze entgegen der Einstrahlrichtung ausgerichtet und auf die Strahlmitte zentriert. Da die Brennlinie 2b des Axicons 9 schon innerhalb desselben beginnt, kann das Substrat 1 (das hier senkrecht zur Hauptstrahlachse angeordnet ist) im Strahlengang unmittelbar nach dem Axicon 9 positioniert werden. Wie Figur 4 zeigt, ist aufgrund der optischen Eigenschaften des Axicons auch eine Verschiebung des Substrats 1 entlang der Strahlrichtung möglich, ohne dass dieses den Bereich der Brennlinie 2b verlässt. Der ausgedehnte Abschnitt der induzierten Absorption 2c im Material des Substrats 1 erstreckt sich somit über die gesamte Substrattiefe d.

Der gezeigte Aufbau hat allerdings folgende Beschränkungen: Da die Brennline des Axicons 9 schon innerhalb der Linse beginnt, wird bei endlichem Arbeitsabstand zwischen Linse und Material ein bedeutender Teil der Laserenergie nicht in den Teil 2c der Brennlinie 2b fokussiert, der im Material liegt. Weiterhin ist bei den verfügbaren Brechungsindizes und Kegelwinkeln des Axicons 9 die Länge I der Brennlinie 2b verknüpft mit dem Strahldurchmesser, weshalb bei relativ dünnen Materialien (einige Millimeter) die Brennlinie insgesamt zu lang ist, wodurch wiederum die Laserenergie nicht gezielt in das Material fokussiert werden kann.

Aus diesem Grund ergibt sich eine verbesserte erfindungsgemäß einsetzbare optische Anordnung 6, wenn diese sowohl ein Axicon als auch eine fokussierende Linse umfasst.

Figur 5a zeigt eine solche optische Anordnung 6, bei der im Strahlengang des Lasers 3 entlang der Strahlrichtung gesehen zunächst ein erstes optisches Element mit einer nicht-sphärischen Freifläche, die zum Ausbilden einer ausgedehnten Laserstrahlbrennlinie 2b ausgeformt ist, positioniert ist. Im gezeigten Fall ist dieses erste optische Element ein Axicon 10 mit 5° Kegelwinkel, das senkrecht zur Strahlrichtung und auf den Laserstrahl 3 zentriert positioniert ist. Die Kegelspitze des Axicons zeigt dabei entgegen der Strahlrichtung. In Strahlrichtung im Abstand z1 vom Axicon 10 ist ein zweites, fokussierendes optisches Element, hier eine plankonvexe Linse 11 (deren Wölbung zum Axicon hin zeigt) positioniert. Der Abstand z1 ist mit hier mit ca. 300 mm so gewählt, dass die vom Axicon 10 geformte Laserstrahlung ringförmig auf den außenliegenden Bereichen der Linse 11 auftrifft. Die Linse 11 fokussiert die ringförmig auftreffende Strahlung strahlausgangsseitig im Abstand z2 von hier ca. 20 mm von der Linse 11 auf eine Brennlinie 2b definierter Länge von hier 1.5 mm. Die effektive Brennweite der Linse 11 beträgt hier 25 mm. Die ringförmige Transformation des Laserstrahls durch das Axicon 10 ist hier mit dem Bezugszeichen SR versehen.

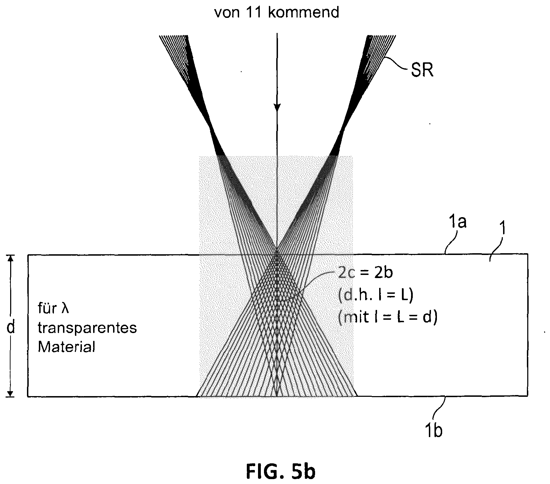

Figur 5b zeigt die Ausbildung der Brennlinie 2b bzw. der induzierten Absorption 2c im Material des Substrats 1 gemäß Fig. 5a im Detail. Die optischen Eigenschaften der beiden Elemente 10, 11 sowie die Positionierung derselben erfolgt hier so, dass die Ausdehnung I der Brennlinie 2b in Strahlrichtung exakt mit der Dicke d des Substrats 1 übereinstimmt. Dementsprechend ist eine genaue Positionierung des Substrats 1 längs der Strahlrichtung notwendig, um, wie in Figur 5b gezeigt, die Brennlinie 2b exakt zwischen den beiden Oberflächen 1a und 1b des Substrats 1 zu positionieren.

Gemäß der Erfindung ist es somit vorteilhaft, wenn sich die Brennlinie in einem bestimmten Abstand der Laseroptik bildet, und der Großteil der Laserstrahlung bis an ein gewünschtes Ende der Brennline fokussiert wird. Dies kann wie beschrieben dadurch erreicht werden, dass ein hauptsächlich fokussierendes Element 11 (Linse) nur ringförmig auf einer gewünschten Zone beleuchtet wird, wodurch zum einen die gewünschte numerische Apertur und somit die gewünschte Spotgröße realisiert wird, zum anderen jedoch nach der gewünschten Brennline 2b der Zerstreuungskreis über sehr kurze Distanz in der Mitte des Spots an Intensität verliert, da sich ein im Wesentlichen ringförmiger Spot ausbildet. Somit wird die Rissbildung im Sinne der Erfindung innerhalb kurzer Distanz in der gewünschten Tiefe des Substrats gestoppt. Eine Kombination aus Axicon 10 und Fokuslinse 11 erfüllt diese Anforderung. Hierbei wirkt das Axicon 10 in zweierlei Weise: durch das Axicon 10 wird ein gewöhnlich runder Laserspot ringförmig auf die fokussierende Linse 11 gesendet und die Aspherizität des Axicons 10 bewirkt, dass sich anstatt eines Brennpunktes in der Fokusebene der Linse eine Brennlinie außerhalb der Fokusebene bildet. Die Länge I der Brennlinie 2b kann eingestellt werden über den Strahldurchmesser auf dem Axicon. Die numerische Apertur entlang der Brennlinie wiederum kann eingestellt werden über den Abstand z1 Axicon-Linse und über den Kegelwinkel des Axikons. Auf diese Weise kann somit die gesamte Laserenergie in der Brennlinie konzentriert werden.

Soll die Rissbildung im Sinne der Erfindung bis auf die Austrittsseite des Substrates anhalten, so hat die ringförmige Beleuchtung immer noch den Vorteil, dass zum einen die Laserleistung bestmöglich genutzt wird, da ein Großteil des Laserlichtes in der gewünschten Länge der Brennlinie konzentriert bleibt, zum anderen durch die ringförmige beleuchtete Zone zusammen mit der durch die anderen optischen Funktionen eingestellten, gewünschten Aberration eine gleichförmige Spotgröße entlang der Brennlinie, und dass somit ein gleichförmiger Trennprozess gemäß der Erfindung entlang der Brennlinie erreicht werden kann.

Anstelle der in Figur 5a gezeigten plankonvexen Linse kann auch eine fokussierende Meniskuslinse oder eine andere höher korrigierte Fokussierlinse (Asphäre, Mehrlinser) eingesetzt werden.

Zur Erzeugung sehr kurzer Brennlinien 2b mit der in Fig. 5a gezeigten Kombination aus einem Axicon und einer Linse müsste man sehr geringe Strahldurchmesser des auf das Axicon einfallenden Laserstrahls wählen. Das hat den praktischen Nachteil, dass die Zentrierung des Strahles auf die Spitze des Axicons sehr genau sein muss, und deshalb das Ergebnis sehr empfindlich gegen Richtungsschwankungen des Lasers (Strahldriftstabilität) wird. Weiterhin ist ein eng kollimierter Laserstrahl sehr divergent, d.h. das Strahlbündel zerläuft aufgrund der Lichtbeugung über kurze Wegstrecken hinweg wieder.

Beides kann durch Einfügen einer weiteren Linse, einer Kollimationslinse 12, vermieden werden (Fig. 6): durch diese weitere positive Linse 12 kann die ringförmige Beleuchtung der Fokussierlinse 11 sehr schmal eingestellt werden. Die Brennweite f' der Kollimationslinse 12 wird so gewählt, dass sich der gewünschte Ringdurchmesser dᵣ bei einem Abstand z1a vom Axicon zur Kollimationslinse 12, der gleich f' ist, ergibt. Die gewünschte Breite bᵣ des Ringes kann über den Abstand z1b (Kollimationslinse 12 zu Fokussierlinse 11) gewählt werden. Rein geometrisch folgt nun aus der geringen Breite der ringförmigen Beleuchtung eine kurze Brennlinie. Ein Minimum erzielt man wiederum im Abstand f'.

Die in Figur 6 gezeigte optische Anordnung 6 basiert somit auf der in Figur 5a gezeigten, sodass nachfolgend nur die Unterschiede beschrieben werden. Zusätzlich ist hier zentrisch in den Strahlengang zwischen Axicon 10 (das hier mit seiner Kegelspitze entgegen der Strahlrichtung angeordnet ist) einerseits und der plankonvexen Linse 11 andererseits die hier ebenfalls als plankonvexe Linse (mit ihrer Wölbung entgegen der Strahlrichtung zeigende) ausgebildete Kollimationslinse 12 eingebracht. Der Abstand der Kollimationslinse 12 vom Axicon 10 ist hier mit z1a bezeichnet, der Abstand von der Fokussierlinse 11 von der Kollimationslinse 12 mit z1b und der Abstand der erzeugten Brennlinie 2b von der Fokussierlinse 11 mit z2 (jeweils in Strahlrichtung gesehen). Wie Figur 6 zeigt, wird die divergierend sowie unter dem Ringdurchmesser dᵣ auf die Kollimationslinse 12 einfallende, vom Axicon 10 geformte ringförmige Strahlung SR entlang der Strecke z1b bei zumindest nährungsweise konstant bleibendem Ringdurchmesser dᵣ auf die gewünschte Ringbreite bᵣ am Ort der Fokussierlinse 11 eingestellt. Im gezeigten Fall soll eine sehr kurze Brennlinie 2b erzeugt werden, sodass die Ringbreite bᵣ von ca. 4 mm am Ort der Linse 12 durch die Fokussiereigenschaften letzterer am Ort der Linse 11 auf ca. 0.5 mm reduziert wird (Ringurchmesser dᵣ hier beispielsweise 22 mm).

Im dargestellten Beispiel kann mit einem typischen Strahldurchmesser aus dem Laser von 2 mm, mit einer Fokuslinse 11 von f = 25 mm Brennweite und einer Kollimationslinse von f' = 150 mm Brennweite eine Länge der Brennlinie I von unter 0.5 mm erreicht werden. Weiterhin gilt Z1a = Z1b = 140 mm und Z2 = 15 mm.

Nachfolgend wird ein Beispiel des erfindungsgemäßen Durchtrennens von ungehärtetem Glas mit einer optischen Anordnung gemäß Figur 3a in einem erfindungsgemäßen Aufbau gemäß Figur 7 gegeben (anstelle der in Figur 3a gezeigten optischen Anordnung 6 können auch die anderen vorstehend beschriebenen optischen Anordnungen 6 im Aufbau gemäß Figur 7 eingesetzt werden, indem die dort gezeigte Blenden-Linsen-Kombination 8, 7 entsprechend ersetzt wird).

Borosilikat- oder Sodalime-Gläser 1 ohne sonstige Einfärbungen (insb. mit niedrigem Eisengehalt) sind optisch transparent von ca. 350 nm bis ca. 2.5 µm. Gläser sind generell schlechte Wärmeleiter, weshalb Laser-Impulsdauern von wenigen Nanosekunden bereits keine wesentliche Wärmediffusion aus einer Brennlinie 2b heraus erlauben. Dennoch sind noch kürzere Laser-Impulsdauern vorteilhaft, da mit Sub-Nanosekunden- bzw. Pikosekunden-Pulsen eine gewünschte induzierte Absorption über nichtlineare Effekte leichter zu erreichen ist (Intensität wesentlich höher).

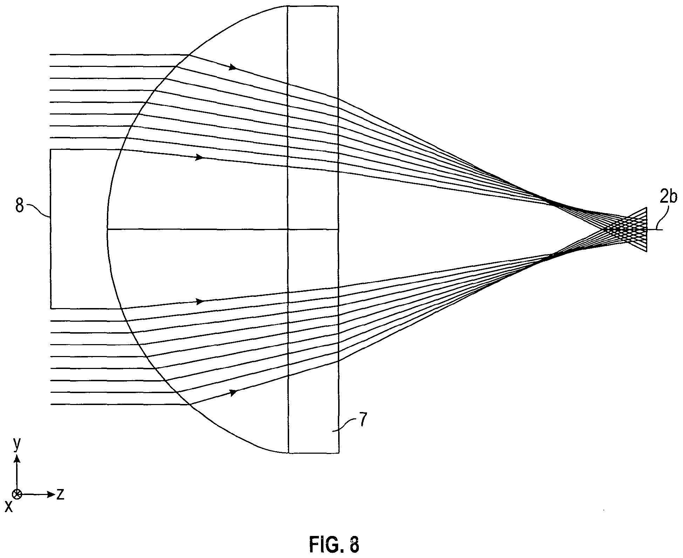

Zur Durchtrennung von Flachgläsern nach der Erfindung geeignet ist z.B. ein handelsüblicher Picosekunden-Laser 3, der folgende Parameter aufweist: Wellenlänge 1064 nm, Impulsdauer von 10 ps, Pulswiederhol-Frequenz von 100 kHz, mittlere Leistung (gemessen direkt nach dem Laser) von bis zu 50 W. Der Laserstrahl weist zunächst einen Strahldurchmesser (gemessen bei 13% der Spitzenintensität, d.h. 1/e²-Durchmesser eines Gauss-Strahlbündels) von ca. 2 mm auf, die Strahlqualität beträgt mindestens M² < 1.2 (bestimmt nach DIN/ISO 11146). Mit einer Strahlaufweitungsoptik 22 (handelsübliches Strahlteleskop nach Kepler) wird der Strahldurchmesser um den Faktor 10 auf ca. 20-22 mm erhöht (21, 23, 24 und 25 sind strahlumlenkende Spiegel). Mit einer sog. annularen Blende 8 von 9 mm Durchmesser wird der innere Teil des Strahlenbündels abgeblendet, sodass sich ein ringförmiger Strahl bildet. Mit diesem ringförmigen Strahl wird z.B. eine plankonvexe Linse 7 mit 28 mm Brennweite (Quarzglas mit Radius 13 mm) beleuchtet. Durch die starke (gewünschte) sphärische Aberration der Linse 7 entsteht die Brennlinie gemäß der Erfindung. Vgl. hierzu neben Fig. 7 auch Fig. 8, die die Erzeugung der Brennlinie 2b aus den Randstrahlen durch die Linse 7 skizziert.

Der theoretische Durchmesser δ der Brennlinie variiert entlang der Strahlachse, deshalb ist es für die Erzeugung einer homogenen Rissfläche vorteilhaft, wenn die Substratdicke d hier geringer ist als ca. 1 mm (typische Dicken für Displaygläser sind 0.5 mm bis 0.7 mm). Mit einer Spotgröße von ca. 2 µm und einem Abstand von Spot zu Spot von 5 µm ergibt sich eine Geschwindigkeit von 0.5 m/sec, mit der die Brennlinie über das Substrat 1 geführt 5 (vgl. Fig. 9) werden kann. Mit 25 W mittlerer Leistung auf dem Substrat (gemessen nach der Fokussierlinse 7) ergibt sich aus der Impulsfolgefrequenz von 100 kHz eine Pulsenergie von 250 µJ, die auch in einem strukturierten Puls (rapide Abfolge von Einzelimpulsen im Abstand von nur 20 ns, sog. Burstpuls) von 2 bis 5 Sub-Pulsen erfolgen kann.

Ungehärtete Gläser haben im Wesentlichen keine inneren Spannungen, weshalb hier die noch verhakte und mit ungetrennten Brücken verbundene Störungszone ohne äußere Einwirkung die Teile zuerst noch zusammenhält. Wenn man jedoch eine thermische Spannung einbringt, trennt sich das Substrat vollständig und ohne weitere äußere Krafteinbringung entlang der gelaserten Bruchfläche 5. Hierzu wird ein CO₂-Laser mit bis zu 250 W mittlerer Leistung auf eine Spotgröße von ca. 1 mm fokussiert, und dieser Spot mit bis zu 0.5 m/s über die Trennlinie 5 geführt. Der lokale thermische Stress durch die eingebrachte Laserenergie (5 J pro cm der Trennlinie 5) trennt das Werkstück 1 vollständig.

Zum Durchtrennen dickerer Gläser muss die Schwellintensität für den Prozess (induzierte Absorption und Ausbildung einer Störungszone durch thermischen Schock) naturgemäß über eine längere Brennlinie I erreicht werden. Somit folgen höhere nötige Pulsenergien und höhere mittlere Leistungen. Mit dem oben beschriebenen Optikaufbau und der maximal zur Verfügung stehenden Laserleitung (nach Verlusten durch Optik) von 39 W auf dem Substrat gelingt die Durchtrennung von ca. 3 mm dickem Glas. Dabei ist zum einen die annulare Blende 8 enfernt, und zum anderen der Abstand Linse 7 zu Substrat so korrigiert (erhöht in Richtung nomineller Fokusabstand), dass eine längere Brennlinie im Substrat entsteht.

Nachfolgend wird ein weiteres Ausführungsbeispiel zum Durchtrennen von gehärtetem Glas (ebenfalls mit der in den Figuren 3a und 7 gezeigten Vorrichtung) vorgestellt.

Natriumhaltige Gläser werden gehärtet, indem durch Tauchen in flüssige Kaliumsalz-Bäder an der Glasoberfläche Natrium gegen Kalium ausgetauscht wird. Dies führt zu einer erheblichen inneren Spannung (Druckspannung) in einer 5-50 µm dicken Schicht an den Oberflächen, was wiederum zu der höheren Stabilität führt.

Grundsätzlich sind die Prozessparameter beim Durchtrennen gehärteter Gläser ähnlich denen bei ungehärteten Gläsern vergleichbarer Dimension und Zusammensetzung. Allerdings kann das gehärtete Glas durch die innere Spannung sehr viel leichter zerspringen, und zwar durch ungewünschtes Risswachstum, die nicht entlang der gelaserten Sollbruchfläche 5, sondern in das Material hinein erfolgt. Deshalb ist das Parameterfeld für das erfolgreiche Durchtrennen eines bestimmten gehärteten Glases enger gefasst. Insbesondere die mittlere Laserleistung und die dazugehörige Schnittgeschwindigkeit müssen recht genau eingehalten werden, und zwar in Abhängigkeit von der Dicke der gehärteten Schicht. Für ein Glas mit 40 µm dicker gehärteter Schicht und 0.7 mm Gesamtdicke ergeben sich bei dem o.g. Aufbau z.B. folgende Parameter: Schnittgeschwindigkeit von 1m /s bei 100 kHz Pulsfolgefrequenz, daher ein Spotabstand von 10 µm, bei einer mittleren Leistung von 14 W.

Die innere Spannung der gehärteten Gläser führt dazu, dass die Bruchzone 5 sich nach einiger Zeit (wenige Sekunden) vollständig ausbildet, und das Substrat in die gewünschten Teile separiert ist.

Sehr dünne gehärtete Gläser (< 100 µm) bestehen überwiegend aus verspanntem Material, d.h. Vorder- und Rückseite sind z.B. jeweils 30 µm natriumverarmt und somit gehärtet, und nur 40 µm im Inneren sind ungehärtet. Dieses Material zerspringt sehr leicht und vollständig, wenn eine der Oberflächen verletzt wird. Solch gehärtete Glasfolien waren im Stand der Technik bisher nicht bearbeitbar.

Die Durchtrennung dieses Materials nach der Methode der Erfindung gelingt, wenn a) der Durchmesser der Brennlinie sehr klein ist, z.B. kleiner 1 µm, b) der Abstand von Spot zu Spot gering ist, z.B. zwischen 1 und 2 µm, und c) die Trenngeschwindigkeit hoch genug ist, sodass das Risswachstum dem Laserprozess nicht vorauseilen kann (hohe Laserpuls-Wiederholfrequenz z.B. 200 kHz bei 0.2 bis 0.5 m/s).

Nachfolgend wird ein weiteres Ausführungsbeispiel (ebenfalls mit der in der Figuren 3a und 7 beschriebenen Vorrichtung) zum Durchtrennen von Saphirglas und kristallinem Saphir vorgestellt.

Saphirkristalle und Saphirgläser sind Gläsern zwar optisch ähnlich (Transparenz und Brechzahl), verhalten sich mechanisch und thermisch jedoch wesentlich anders. So ist Saphir ein ausgezeichneter Wärmeleiter, ist mechanisch extrem belastbar, und sehr hart und kratzbeständig. Dennoch können mit dem oben beschrieben Laser und Optikaufbau dünne (0.3 mm bis 0.6 mm) Saphirkristalle und -gläser durchtrennt werden. Wegen der hohen mechanischen Stabilität ist es besonders wichtig, dass die verbleibenden Brücken zwischen den zu trennenden Teilen minimiert sind, da andernfalls sehr hohe Kräfte zum endgültigen Trennen benötigt werden. Die Störungszone muss möglichst vollständig von Eintritts- 1a zu Austrittsfläche 1b des Substrats ausgebildet sein. Wie bei dickeren Gläsern kann das mit höherer Pulsenergie und somit höherer mittlerer Laserleistung erzielt werden. Weiterhin ist kristalliner Saphir doppelbrechend. Die Schnittfläche muss senkrecht zur optischen Achse liegen (sog. C-Schnitt). Zum Durchtrennen eines kristallinen Saphirwafers von 0.45 mm Dicke können folgende Parameter verwendet werden: eine mittlere Laserleistung von 30 W bei 100 kHz Pulsfolgefrequenz, eine Spotgröße von 2 µm, und ein Sportabstand von 5 µm, was einer Schnittgeschwindigkeit von 0.5m/s bei der genannten Pulsfolgefrequenz entspricht. Wie bei Glas kann es zur vollständigen Trennung erforderlich sein, eine nachfolgende Erwärmung der Schnittlinie 5 durchzuführen, z.B. mit einem CO₂-Laserspot, damit sich über den thermischen Stress die Störungszone über Risswachstum zu einer vollständigen, durchgehenden, unverhakten Trennfläche ausbildet.

Figur 9 zeigt schließlich ein Mikroskopbild der Oberfläche einer erfindungsgemäß bearbeiteten Glasscheibe. Die einzelnen Brennlinien bzw. ausgedehnte Abschnitte induzierter Absorption 2c, die hier mit den Bezugszeichen 2c-1, 2c-2 ... versehen sind (in die Tiefe des Substrats senkrecht zur dargestellten Oberfläche) verbinden sich entlang der Linie 5, entlang derer der Laserstrahl über die Oberfläche 4 des Substrats geführt wurde, durch Rissbildung zu einer Trennfläche zur Separation der Substratteile. Gut zu sehen ist die Vielzahl der einzelnen ausgedehnten Abschnitte induzierter Absorption, wobei im gezeigten Fall die Pulswiederholfrequenz des Lasers so auf die Vorschubgeschwindigkeit zur Bewegung des Laserstrahls über die Oberfläche 4 abgestimmt wurde, dass das Verhältnis V3 = a/δ aus dem mittleren Abstand a unmittelbar benachbarter Abschnitte 2c-1,2, 2c-2, ... und dem mittleren Durchmesser δ der Laserstrahlbrennlinie etwa 2.0 beträgt.

## Patentansprüche

1. Verfahren zum laserbasierten Bearbeiten eines nachfolgend als Substrat (1) bezeichneten Wafers oder Glaselements, um das Substrat (1) in mehrere Teile zu trennen, bei dem
der Laserstrahl (2a, 2b) eines Lasers (3) zum Bearbeiten des Substrats (1) auf letzteres gerichtet wird, wobei die Wellenlänge λ. des Lasers (3) so gewählt wird, dass das Material des Substrats (1) für diese Wellenlänge transparent ist oder im wesentlichen transparent ist, wobei unter letzterem verstanden wird, dass die längs der Strahlrichtung erfolgte Intensitätsabnahme des Laserstrahls im Material des Substrats (1) je Millimeter Eindringtiefe 10% oder weniger beträgt,
wobei mit einer im Strahlengang des Lasers (3) positionierten optischen Anordnung (6) aus dem auf letztere eingestrahlten Laserstrahl (2a) strahlausgangsseitig der optischen Anordnung (6) eine längs der Strahlrichtung gesehen ausgedehnte Laserstrahlbrennlinie (2b) geformt wird, und
wobei das Substrat (1) relativ zur Laserstrahlbrennlinie (2b) so positioniert wird, dass im Material des Substrats (1) längs eines in Strahlrichtung gesehen ausgedehnten Abschnitts (2c) der Laserstrahlbrennlinie (2b) eine induzierte Absorption erzeugt wird, durch die entlang dieses ausgedehnten Abschnitts (2c) eine induzierte Rissbildung im Material des Substrats (1) erfolgt,
***dadurch gekennzeichnet, dass***
das Substrat (1) relativ zur Laserstrahlbrennlinie (2b) so positioniert wird, dass sich der ausgedehnte Abschnitt (2c) der induzierten Absorption im Material, also im Inneren des Substrats (1) bis zu mindestens einer der beiden sich gegenüberliegenden Substratoberflächen (1a, 1b) erstreckt,
dass der mittlere Durchmesser δ der Laserstrahlbrennlinie (2b), also deren Spotdurchmesser, zwischen 0.5 µm und 5 µm beträgt, und
dass die mittlere Laserleistung, gemessen unmittelbar strahlausgangsseitig des Lasers (3), zwischen 10 Watt und 100 Watt beträgt.

2. Verfahren nach Anspruch 1,
***dadurch gekennzeichnet, dass***
das Substrat (1) relativ zur Laserstrahlbrennlinie (2b) so positioniert wird, dass sich der ausgedehnte Abschnitt (2c) der induzierten Absorption im Material, also im Inneren des Substrats (1) von einer (1a) der beiden sich gegenüberliegenden Substratoberflächen bis hin zur anderen (1b) der beiden sich gegenüberliegenden Substratoberflächen, also über die gesamte Schichtdicke d des Substrats (1), erstreckt.

3. Verfahren nach Anspruch 1,
***dadurch gekennzeichnet, dass***
das Substrat (1) relativ zur Laserstrahlbrennlinie (2b) so positioniert wird, dass sich der ausgedehnte Abschnitt (2c) der induzierten Absorption im Material, also im Inneren des Substrats (1) ausgehend von einer (1a) der beiden sich gegenüberliegenden Substratoberflächen in das Substrat (1) hinein, jedoch nicht bis hin zur anderen (1b) der beiden sich gegenüberliegenden Substratoberflächen, also nicht über die gesamte Schichtdicke d des Substrats (1), erstreckt, bevorzugt über 80% bis 98%, bevorzugt über 85% bis 95%, besonders bevorzugt über 90% dieser Schichtdicke erstreckt.

4. Verfahren nach einem der vorhergehenden Ansprüche,
***dadurch gekennzeichnet, dass***
die Ausdehnung / der Laserstrahlbrennlinie (2b) und/oder die Ausdehnung des Abschnitts (2c) der induzierten Absorption im Material, also im Inneren des Substrats (1), jeweils in Strahllängsrichtung gesehen, zwischen 0.1 mm und 100 mm, bevorzugt zwischen 0.3 mm und 10 mm, beträgt.

5. Verfahren nach einem der vorhergehenden Ansprüche,
***dadurch gekennzeichnet, dass***
die induzierte Absorption so erzeugt wird, dass die Rissbildung im Gefüge des Substrats (1) ohne Ablation und ohne Aufschmelzen von Material des Substrats (1) erfolgt.

6. Verfahren nach einem der vorhergehenden Ansprüche,
***dadurch gekennzeichnet, dass***
die Schichtdicke d des Substrats (1), gemessen senkrecht zu den beiden sich gegenüberliegenden Substratoberflächen (1a, 1b), zwischen 30 µm und 3000 µm, bevorzugt zwischen 100 µm und 1000 µm, beträgt,
und/oder
dass das Verhältnis *V1=l*/*d* aus dieser Ausdehnung / der Laserstrahlbrennlinie (2b) und dieser Schichtdicke d des Substrats (1) zwischen 10 und 0.5, bevorzugt zwischen 5 und 2, beträgt,
und/oder
dass das Verhältnis *V2=L*/*D* aus der Ausdehnung *L* des Abschnitts (2c) der induzierten Absorption im Material, also im Inneren des Substrats (1) in Strahllängsrichtung gesehen und der mittleren Ausdehnung D des Abschnitts (2c) der induzierten Absorption im Material, also im Inneren des Substrats (1) quer zur Strahllängsrichtung gesehen zwischen 5 und 5000, bevorzugt zwischen 50 und 500 beträgt.

7. Verfahren nach einem der vorhergehenden Ansprüche,
***dadurch gekennzeichnet, dass***
der mittlere Durchmesser δ der Laserstrahlbrennlinie (2b), also deren Spotdurchmesser, zwischen 1 µm und 3 µm, bevorzugt 2 µm beträgt,
und/oder
dass die Impulsdauer τ des Lasers (3) so gewählt wird, dass innerhalb der Wechselwirkungszeit mit dem Material des Substrats (1) die Wärmediffusion in diesem Material vernachlässigbar ist, bevorzugt keine Wärmediffusion erfolgt, wozu bevorzugt τ, δ und die Wärmediffusionskonstante α des Materials des Substrats (1) gemäß τ << δ²/α eingestellt werden und/oder bevorzugt τ kleiner als 10 ns, bevorzugt kleiner als 100 ps, gewählt wird,
und/oder
dass die Pulswiederholfrequenz das Lasers (3) zwischen 10 kHz und 1000 kHz, bevorzugt 100 kHz, beträgt,
und/oder
dass der Laser (3) als Einzelpulslaser oder als Burstimpulslaser betrieben wird,
und/oder
dass die mittlere Laserleistung, gemessen unmittelbar strahlausgangsseitig des Lasers (3), zwischen 30 Watt und 50 Watt beträgt.

8. Verfahren nach einem der vorhergehenden Ansprüche,
***dadurch gekennzeichnet, dass***
der Laser, insbesondere für im sichtbaren Wellenlängenbereich transparente Gläser oder Kristalle als Substrat (1), ein Nd:YAG Laser mit einer Wellenlänger λ von 1064 nm oder ein Yb:YAG Laser mit einer Wellenlänge λ von 1030 nm, oder, insbesondere für im infraroten Wellenlängenbereich transparente Halbleitersubstrate (1), ein Er:YAG Laser mit einer Wellenlänge λ zwischen 1.5 µm und 1.8 µm ist.

9. Verfahren nach einem der vorhergehenden Ansprüche,
***dadurch gekennzeichnet, dass***
der Laserstrahl (2a, 2b) senkrecht auf das Substrat (1) eingestrahlt wird, dass also das Substrat (1) relativ zur Laserstrahlbrennlinie (2b) so positioniert wird, dass die induzierte Absorption entlang des ausgedehnten Abschnitts (2c) der Laserstrahlbrennlinie (2b) senkrecht zur Ebene des Substrats erfolgt
oder
dass der Laserstrahl (2a, 2b) unter einem Winkel β größer 0° relativ zur Normalen der Ebene des Substrats (1) auf das Substrat (1) eingestrahlt wird, dass also das Substrat (1) relativ zur Laserstrahlbrennlinie (2b) so positioniert wird, dass die induzierte Absorption entlang des ausgedehnten Abschnitts (2c) der Laserstrahlbrennlinie (2b) unter dem Winkel 90°-β zur Ebene des Substrats erfolgt, wobei bevorzugt β ≤ 45°, bevorzugt β ≤ 30° gilt.

10. Verfahren nach einem der vorhergehenden Ansprüche,
***dadurch gekennzeichnet, dass***
der Laserstrahl (2a, 2b) relativ zur Oberfläche (1a, 4) des Substrats (1) entlang einer Linie (5) bewegt wird, entlang derer das Substrat (1) zum Erhalt der mehreren Teile zu durchtrennen ist, wobei entlang dieser Linie (5) eine Vielzahl (2c-1, 2c-2,...) ausgedehnter Abschnitte (2c) induzierter Absorption im Inneren des Substrats (1) erzeugt werden,
wobei bevorzugt das Verhältnis *V3=a*/*δ* aus dem mittleren Abstand *α* unmittelbar benachbarter, also direkt nacheinander erzeugter ausgedehnter Abschnitte (2c) induzierter Absorption und dem mittleren Durchmesser δ der Laserstrahlbrennlinie (2b), also dem Spotdurchmesser zwischen 0.5 und 3.0, bevorzugt zwischen 1.0 und 2.0 ist.

11. Verfahren nach dem vorhergehenden Anspruch,
***dadurch gekennzeichnet, dass***
während und/oder nach dem Erzeugen der Vielzahl (2c-1, 2c-2,...) ausgedehnter Abschnitte (2c) induzierter Absorption im Inneren des Substrats (1) mechanische Kräfte auf das Substrat (1) ausgeübt werden und/oder thermische Spannungen in das Substrat (1) eingebracht werden, insbesondere das Substrat ungleichförmig erwärmt und wieder abgekühlt wird, um jeweils zwischen unmittelbar benachbarten (2c-1, 2c-2) ausgedehnten Abschnitten (2c) induzierter Absorption eine Rissbildung zum Auftrennen des Substrats in die mehreren Teile zu bewirken,
wobei bevorzugt die thermischen Spannungen durch Bestrahlen des Substrats (1) mit einem CO₂-Laser entlang der Linie (5) eingebracht werden.

12. Vorrichtung zum laserbasierten Bearbeiten eines nachfolgend als Substrat (1) bezeichneten Glaselements oder Wafers, um das Substrat (1) in mehrere Teile zu trennen,
mit der der Laserstrahl (2a, 2b) eines Lasers (3) zum Bearbeiten des Substrats (1) so auf letzteres richtbar ist, dass das Material des Substrats (1) für die Wellenlänge λ des Lasers (3) transparent ist oder im wesentlichen transparent ist, wobei unter letzterem verstanden wird, dass die längs der Strahlrichtung erfolgte Intensitätsabnahme des Laserstrahls im Material des Substrats (1) je Millimeter Eindringtiefe 10% oder weniger beträgt,
mit einer im Strahlengang des Lasers (3) positionierten optischen Anordnung (6), mit der aus dem auf letztere eingestrahlten Laserstrahl (2a) strahlausgangsseitig der optischen Anordnung (6) eine längs der Strahlrichtung gesehen ausgedehnte Laserstrahlbrennlinie (2b) formbar ist,
mit der das Substrat (1) relativ zur Laserstrahlbrennlinie (2b) so positionierbar ist oder positioniert ist, dass im Material des Substrats (1) längs eines in Strahlrichtung gesehen ausgedehnten Abschnitts (2c) der Laserstrahlbrennlinie (2b) eine induzierte Absorption erfolgt, wodurch entlang dieses ausgedehnten Abschnitts (2c) eine induzierte Rissbildung im Material des Substrats bewirkt wird,
***dadurch gekennzeichnet, dass***
die Vorrichtung Mittel aufweist, so dass
das Substrat (1) relativ zur Laserstrahlbrennlinie (2b) so positionierbar ist oder positioniert ist, dass sich der ausgedehnte Abschnitt (2c) der induzierten Absorption im Material, also im Inneren des Substrats (1) bis zu mindestens einer der beiden sich gegenüberliegenden Substratoberflächen (1a, 1b) erstreckt,
dass der mittlere Durchmesser δ der Laserstrahlbrennlinie (2b), also deren Spotdurchmesser, zwischen 0.5 µm und 5 µm beträgt, und
dass die mittlere Laserleistung, gemessen unmittelbar strahlausgangsseitig des Lasers (3), zwischen 10 Watt und 100 Watt beträgt.

13. Vorrichtung nach dem vorhergehenden Anspruch,
***dadurch gekennzeichnet, dass***
die optische Anordnung (6) ein fokussierendes optisches Element mit sphärischer Aberration, bevorzugt eine sphärisch geschliffene konvexe Linse (7), umfasst,
wobei bevorzugt im Strahlengang des Lasers (3) vor diesem fokussierenden optischen Element (7) eine Blende (8) der optischen Anordnung (6), bevorzugt eine annulare Blende, positioniert ist, mit der die im Zentrum des auf die Blende einfallenden Laserstrahls (2a) liegenden Strahlenbündel (2aZ) ausblendbar sind, so dass lediglich die außerhalb dieses Zentrums liegenden Randstrahlen (2aR) auf dieses fokussierende optische Element einfallen.

14. Vorrichtung nach einem der beiden vorhergehenden Ansprüche,
***dadurch gekennzeichnet, dass***
die optische Anordnung (6) ein optisches Element mit einer nicht-sphärischen Freifläche, die zum Ausbilden der Laserstrahlbrennlinie (2b) mit definierter Ausdehnung I, also definierter Länge in Stahlrichtung gesehen, ausgeformt ist, umfasst,
wobei das optische Element mit der nicht-sphärischen Freifläche bevorzugt ein Kegelprisma oder Axicon (9) ist.

15. Vorrichtung nach einem der drei vorhergehenden Ansprüche,
***dadurch gekennzeichnet, dass***
die optische Anordnung (6) im Strahlengang des Lasers (3) zunächst ein erstes optisches Element mit einer nicht-sphärischen Freifläche, die zum Ausbilden der ausgedehnten Laserstrahlbrennlinie (2b) ausgeformt ist, bevorzugt ein Kegelprisma oder Axicon (10), und strahlausgangsseitig dieses ersten optischen Elements sowie beabstandet *z1* von diesem ein zweites, fokussierendes optisches Element, insbesondere eine konvexe Linse (11), umfasst,
wobei bevorzugt diese beiden optischen Elemente so positioniert und ausgerichtet sind, dass das erste optische Element die auf es einfallende Laserstrahlung ringförmig (SR) auf das zweite optische Element wirft, so dass auf der Strahlausgangsseite des zweiten optischen Elements beabstandet z2 von diesem die ausgedehnte Laserstrahlbrennlinie (2b) erzeugt wird.

16. Vorrichtung nach dem vorhergehenden Anspruch,
***dadurch gekennzeichnet, dass***
im Strahlengang des Lasers (3) zwischen dem ersten und dem zweiten optischen Element ein drittes, fokussierendes optisches Element, das insbesondere eine plankonvexe Kollimationslinse (12) ist, positioniert ist,
wobei das dritte optische Element bevorzugt so positioniert und ausgerichtet ist, dass die vom ersten optischen Element ringförmig (SR) geformte Laserstrahlung mit einem definierten mittleren Ringdurchmesser *dᵣ* auf das dritte optische Element fällt und dass das dritte optische Element die Laserstrahlung ringförmig mit diesem Ringdurchmesser *dᵣ* und mit definierter Ringbreite *bᵣ* auf das zweite optische Element wirft.

17. Verwendung eines Verfahrens oder einer Vorrichtung nach einem der vorhergehenden Ansprüche zum
• Trennen von Substraten aus Glas, insbesondere aus Quarz-, Borosilikat-, Saphir- oder Sodalime-Glas, natriumhaltigem Glas, gehärtetem Glas oder ungehärtetem Glas, aus kristallinem Al₂O₃, aus SiO₂•nH₂O (Opal) oder aus einem Halbleitermaterial, insbesondere Si, GaAs, GaN,
• Trennen von ein- oder mehrschichtigen Substraten, insbesondere von Glas-Glas-Verbünden, Glas-Folie-Verbünden, Glas-Folie-Glas-Verbünden oder Glas-Luft-Glas-Verbünden,
• Trennen von beschichteten Substraten, insbesondere von metallbeschichteten Saphirwafern, mit Metall- oder Metalloxidschichten versehenen Siliziumwafern oder mit ITO oder AlZnO beschichteten Substraten,
und/oder
• vollständigen Durchtrennen eines ein- oder mehrschichtigen Substrats oder zum Durchtrennen einer oder mehrerer, aber nicht aller Schichten eines mehrschichtigen Substrats.

18. Gegenstand aus Glas mit zumindest einer Fläche mit einer Mehrzahl von Materialmodifikationen entlang der Fläche, wobei jede der Materialmodifikationen eine Länge im Bereich zwischen 0.1 mm und 100 mm **dadurch gekennzeichnet, dass** jede der Materialmodifikationen einen mittleren Durchmesser im Bereich zwischen 0.5 µm und 5 µm aufweist.

19. Gegenstand aus Glas mit zumindest einer Fläche mit einer Mehrzahl von Materialmodifikationen entlang der Fläche, **dadurch gekennzeichnet, dass** jede der Materialmodifikationen ein Verhältnis V3 = *α*/*δ* des mittleren Abstands *α* der unmittelbar benachbarten Materialmodifikationen und des mittleren Durchmessers *δ* einer Laserstrahl-Brennlinie, die die Materialmodifikationen erzeugt hat, von ungefähr gleich 2.0 aufweist.

## Claims

1. Method for the laser-based processing of a wafer or glass element referred to in the following as a substrate (1) in order to divide the substrate (1) into several parts, in which
the laser beam (2a, 2b) of a laser (3) for processing the substrate (1) is directed onto the latter, wherein the wavelength λ of the laser (3) is selected so that the material of the substrate (1) is transparent or is substantially transparent for this wavelength, wherein the latter is understood to mean that the decrease in intensity of the laser beam taking place along the direction of the beam in the material of the substrate (1) per millimetre of the depth of penetration is 10% or less,,
wherein by means of an optical arrangement (6) positioned in the beam path of the laser (3), a laser beam focal line (2b) that is extended when viewed along the beam direction is formed on the beam output side of the optical arrangement (6) from the laser beam (2a) beamed onto the optical arrangement (6), and
wherein the substrate (1) is positioned relative to the laser beam focal line (2b) in such a way that an induced absorption is produced in the material of the substrate (1) along a section (2c) of the laser beam focal line (2b), said section (2c) being extended when viewed in the beam direction, by means of which induced absorption an induced crack formation takes place along this extended section (2c) in the material of the substrate (1),
***characterised in that***
the substrate (1) is positioned relative to the laser beam focal line (2b) in such a way that the extended section (2c) of the induced absorption in the material, i.e. in the interior of the substrate (1), extends up to at least one of the two opposing substrate surfaces (1a, 1b),
the mean diameter δ of the laser beam focal line (2b), i.e. its spot diameter, is between 0.5µm and 5µm, and
the mean laser output, measured directly on the beam output side of the laser (3), is between 10 and 100 watts.

2. Method according to claim 1,
***characterised in that***
the substrate (1) is positioned relative to the laser beam focal line (2b) in such a way that the extended section (2c) of the induced absorption in the material, i.e. in the interior of the substrate (1), extends from one (1a) of the two opposing substrate surfaces up to the other (1b) of the two opposing substrate surfaces, i.e. across the entire layer thickness d of the substrate (1).

3. Method according to claim 1,
***characterised in that***
the substrate (1) is positioned relative to the laser beam focal line (2b) in such a way that the extended section (2c) of the induced absorption in the material, i.e. in the interior of the substrate (1) extends starting from one (1a) of the two opposing substrate surfaces into the substrate (1), however not up to the other (1b) of the two opposing substrate surfaces, i.e. not across the entire layer thickness d of the substrate (1), preferably across 80% to 98%, preferably across 85% to 95%, and particularly preferably across 90% of this thickness.

4. Method according to one of the preceding claims,
***characterised in that***
the extension / of the laser beam focal line (2b) and/or the extension of the section (2c) of the induced absorption in the material, i.e. in the interior of the substrate (1), in each case when viewed from the longitudinal direction of the beam, is between 0.1mm and 100mm, preferably between 0.3mm and 10mm.

5. Method according to one of the previous claims,
***characterised in that***
the induced absorption is produced in such a way that the crack formation takes place in the structure of the substrate (1) without ablation and without melting the material of the substrate (1).

6. Method according to one of the preceding claims,
***characterised in that***
the layer thickness d of the substrate (1) measured perpendicularly to the two opposing substrate surfaces (1a, 1b) is between 30µm and 3000µm, preferably between 100µm and 1000µm,
and/or
the ratio *VI = l*/*d* of this extension / of the laser beam focal line (2b) and of this layer thickness d of the substrate (1) is between 10 and 0.5, preferably between 5 and 2,
and/or
the ratio *V2 = L*/*D* of the extension *L* of this section (2c) of the induced absorption in the material, i.e. in the interior of the substrate (1), viewed from the longitudinal direction of the beam and the mean extension D of the section (2c) of the induced absorption in the material, i.e. in the interior of the substrate (1), viewed transversely to the longitudinal direction of the beam, is between 5 and 5000, preferably between 50 and 500.

7. Method according to one of the preceding claims,
***characterised in that***
the mean diameter δ of the laser beam focal line (2b), i.e. its spot diameter is between 1µm and 3µm, preferably 2µm,
and/or
the impulse duration τ of the laser (3) is selected in such a way that, within the interaction time with the material of the substrate (1), the heat diffusion in this material is negligible, and preferably no heat diffusion takes place, for which preferably τ, 8 and the heat diffusion constants α of the material of the substrate (1) are set in accordance with τ << δ² / α and/or preferably τ is preferably selected to be lower than 10 ns, preferably lower than 100 ps,
and/or
the pulse repeat frequency of the laser (3) is between 10 kHz and 1000 kHz, preferably 100 kHz,
and/or
the laser (3) is operated as a single pulse laser or as a burst impulse laser,
and/or
the mean laser output, measured directly on the beam output side of the laser (3), is between 30 and 50 watts.

8. Method according to one of the preceding claims,
***characterised in that***
the laser, in particular for glasses or crystals as a substrate (1) that are transparent in the visible wavelength range, is a Nd:YAG laser with a wavelength λ of 1064 nm or a Yb:YAG laser with a wavelength λ of 1030 nm, or, in particular for semiconductor substrates (1) that are transparent in the infrared wave range, is an Er:YAG laser with a wavelength λ between 1.5 µm and 1.8 µm.

9. Method according to one of the preceding claims,
***characterised in that***
the laser beam (2a, 2b) is beamed perpendicularly onto the substrate (1), **in that** therefore the substrate (1) is positioned relative to the laser beam focal line (2b) in such a way that the induced absorption takes place along the extended section (2c) of the laser beam focal line (2b) perpendicularly to the level of the substrate
or
the laser beam (2a, 2b) is beamed onto the substrate (1) at an angle β greater 0° relative to the normals of the plane of the substrate (1), **in that** therefore the substrate (1) is positioned relative to the laser beam focal line (2b) in such a way that the induced absorption takes place along the extended section (2c) of the laser beam focal line (2b) at an angle 90° - β relative to the plane of the substrate, wherein β ≤ 45°, preferably β ≤ 30°.

10. Method according to one of the preceding claims,
***characterised in that***
the laser beam (2a, 2b) is moved relative to the surface (1a, 4) of the substrate (1) along a line (5), along which the substrate (1) is to be divided to retain the several parts, wherein along this line (5), a multitude (2c-1, 2c-2,...) of extended sections (2c) of induced absorption are produced in the interior of the substrate (1),
wherein preferably the ratio *V3= al8* of the mean distance α of the directly adjacent extended sections (2c), i.e. the extended sections (2c) produced directly after one another of the induced absorption and of the mean diameter δ of the laser beam focal line (2b), i.e. the spot diameter, is between 0.5 and 3.0, preferably between 1.0 and 2.0.

11. Method according to the preceding claim,
***characterised in that***
during and/or after producing the multitude (2c-1, 2c-2,...) of extended sections (2c) of the induced absorption in the interior of the substrate (1), mechanical forces are exerted on the substrate (1) and/or thermal tensions are introduced into the substrate (1), in particular that the substrate is unequally heated and cooled down again, in order to effect a crack formation, in each case, between directly adjacent (2c-1, 2c-2) extended sections (2c) of induced absorption for separating the substrate into the several parts,
wherein the thermal tensions are preferably introduced by irradiating the substrate (1) with a CO₂ laser along the line (5).

12. Device for the laser-based processing of a glass element or wafer referred to in the following as substrate (1), in order to divide the substrate (1) into several parts,
with which the laser beam (2a, 2b) of a laser (3) for processing the substrate (1) can be directed onto the latter in such a way that the material of the substrate (1) is transparent for the wavelength λ of the laser (3), or is substantially transparent, wherein the latter is understood to mean that the decrease in intensity of the laser beam in the material of the substrate (1) that takes place along the beam direction per millimetre of the depth of penetration is 10% or less,
having an optical arrangement (6) positioned in the beam path of the laser (3), by means of which a laser beam focal line (2b) that is extended when viewed along the beam direction is able to be formed on the beam output side of the optical arrangement (6) from the laser beam (2a) beamed onto the optical arrangement (6),
with which device the substrate (1) can be positioned or is positioned relative to the laser beam focal line (2b) in such a way that an induced absorption takes place in the material of the substrate (1) along an extended section (2c) of the laser beam focal line (2b) when viewed in the beam direction, whereby an induced crack formation in the material of the substrate is caused along this extended section (2c),
***characterised in that***
the device has means such that
the substrate (1) can be positioned or is positioned relative to the laser beam focal line (2b) in such a way that the extended section (2c) of the induced absorption in the material, i.e. in the interior of the substrate (1), extends up to at least one of the two opposing substrate surfaces (1a, 1b),
the mean diameter δ of the laser beam focal line (2b), i.e. its spot diameter, is between 0.5 µm and 5 µm, and
the mean laser output, measured directly on the beam output side of the laser (3), is between 10 and 100 watts.

13. Device according to the preceding claim,
***characterised in that***
the optical arrangement (6) comprises a focusing optical element with a spherical aberration, preferably a spherically ground convex lens (7),
wherein, preferably in the beam path of the laser (3) in front of this focusing optical element (7), a diaphragm (8) of the optical arrangement (6), preferably an annular diaphragm, is positioned, with which the beam bundles (2aZ) located in the centre of the laser beam (2a) falling onto the diaphragm can be blocked out such that only the peripheral rays (2aR) located outside this centre fall onto this focusing optical element.

14. Device according to one of the two preceding claims,
***characterised in that***
the optical arrangement (6) comprises an optical element with a non-spherical free surface which is formed to form the laser beam focal line (2b) with defined extension I, i.e. defined length viewed in the beam direction,
wherein the optical element with the non-spherical free surface is preferably a cone prism or axicon (9).

15. Device according to one of the three preceding claims,
***characterised in that***
the optical arrangement (6) in the beam path of the laser (3) firstly comprises a first optical element with a non-spherical free surface, which is formed to form the expanded laser beam focal line (2b), preferably a cone prism or axicon (10), and, on the beam output side of this first optical element and at a distance *z1* from it, a second optical element, in particular a convex lens (11),
wherein these two optical elements are preferably positioned and aligned in such a way that the first optical element beams the laser beam falling onto it onto the second optical element in the shape of a ring (SR) such that the extended laser beam focal line (2b) is produced on the beam output side of the second optical element at a distance z2 from this.

16. Device according to the preceding claim,
***characterised in that***
a third focusing optical element is positioned in the beam path of the laser (3) between the first and second optical element, said third optical element being, in particular, a plano-convex collimation lens (12),
wherein the third optical element is preferably positioned and aligned in such a way that the ring-shaped (SR) laser beam formed from the first optical element with a defined mean ring diameter *d* falls on the third optical element, and the third optical element beams the laser beam onto the second optical element in a ring shape with this ring diameter *dᵣ* and with a defined ring width *bᵣ.*

17. Use of a method or a device according to one of the preceding claims for
∘ separating substrates made of glass, in particular made of quartz, borosilicate, sapphire or sodalime glass, sodic glass, tempered glass or untempered glass, made of crystalline Al₂O₃, from SiO₂∘nH₂O (opal) or made of a semiconductor material, especially Si, GaAs, GaN
° separating one or multi-layered substrates, especially glass-glass composites, glass-film composites, glass-film-glass composites or glass-air-glass composites,
° separating coated substrates, in particular metal-coated sapphire wafers, silicon wafers provided with metal or metal oxide layers or with ITO or AlZnO coated substrates,
and/or
° completely separating a one or multi-layer substrate or for separating one or several, but not all, layers of a multi-layer substrate.

18. Glass object having at least one surface with a multitude of material modifications along the surface, wherein each of the material modifications has a length ranging between 0.1mm and 100mm, **characterised in that** each of the material modifications has a mean diameter ranging between 0.5 µm and 5 µm.

19. Glass object having at least one surface with a multitude of material modifications along the surface, **characterised in that** each of the material modifications has a ratio V3= α/δ of the mean distance α of the directly adjacent material modifications and the mean diameter δ of a laser beam focal line, which has produced the material modifications, of approximately 2.0.

## Revendications

1. Procédé pour l'usinage, à base d'un laser, d'une tranche ou d'un élément en verre, ci-après appelé "substrat" (1), pour séparer le substrat (1) en plusieurs parties, dans lequel
le rayon laser (2a, 2b) d'un laser (3) destiné à l'usinage du substrat (1) est dirigé sur ce dernier, la longueur d'onde λ du laser (3) étant choisie de telle sorte que le matériau du substrat (1) soit, pour cette longueur d'onde, transparent ou essentiellement transparent, ce par quoi on entend que la diminution d'intensité du rayon laser, dans la direction du rayon, dans le matériau du substrat (1), est de 10 % ou moins par millimètre de profondeur de pénétration,
dans lequel, avec un montage optique (6), positionné sur la trajectoire du rayon laser (3), il se forme, à partir du rayon laser (2a) tombant sur ce montage, côté sortie du rayon du montage optique (6), une ligne focale (2b) du rayon laser qui s'étend le long de la direction du rayon, et
dans lequel le substrat (1) est positionné, par rapport à la ligne focale (2b) du rayon laser, de telle sorte qu'il se produise dans le matériau du substrat (1), le long d'un segment (2c), étendu dans la direction du rayon, de la ligne focale (2b) du rayon laser, une absorption induite, sous l'effet de laquelle il se produit une fissuration induite dans le matériau du substrat (1) le long de ce segment étendu (2c),
**caractérisé**
**en ce que** le substrat (1) est positionné par rapport à la ligne focale (2b) du rayon laser de telle sorte que le segment étendu (2c) de l'absorption induite dans le matériau, c'est-à-dire dans le volume intérieur du substrat (1), s'étende jusqu'à au moins l'une des deux surfaces opposées l'une à l'autre (1a, 1b) du substrat,
**en ce que** le diamètre moyen δ□de la ligne focale (2b) du rayon laser, c'est-à-dire son diamètre de tache, est compris entre 0,5 µm et 5 µm, et
**en ce que** la puissance moyenne du laser, mesurée immédiatement côté sortie du rayon laser (3), est comprise entre 10 Watt et 100 Watt.

2. Procédé selon la revendication 1, **caractérisé en ce que** le substrat (1) est positionné par rapport à la ligne focale (2b) du rayon laser de telle sorte que le segment étendu (2c) de l'absorption induite dans le matériau, c'est-à-dire dans le volume intérieur du substrat (1), s'étende de l'une (1a) des deux surfaces opposées l'une à l'autre du substrat, jusqu'à l'autre (1b) des deux surfaces opposées l'une à l'autre du substrat, c'est-à-dire sur la totalité de l'épaisseur de couche d du substrat (1).

3. Procédé selon la revendication 1, **caractérisé en ce que** le substrat (1) est positionné, par rapport à la ligne focale (2b) du rayon laser, de telle sorte que le segment étendu (2c) de l'absorption induite dans le matériau, c'est-à-dire dans le volume intérieur du substrat (1), s'étende, à partir de l'une (1a) des deux surfaces opposées l'une à l'autre du substrat, en pénétrant dans le substrat (1), mais non pas jusqu'à l'autre (1b) des deux surfaces opposées l'une à l'autre du substrat, c'est-à-dire non pas sur la totalité de l'épaisseur de couche d du substrat (1), et s'étende de préférence sur 80 à 98 %, de préférence sur 85 à 95 %, d'une manière particulièrement préférée sur 90 % de cette épaisseur de couche.

4. Procédé selon l'une des revendications précédentes, **caractérisé en ce que** l'extension / de la ligne focale (2b) du rayon laser et/ou l'extension du segment (2c) de l'absorption induite dans le matériau, c'est-à-dire dans le volume intérieur du substrat (1), chacune vue dans la direction longitudinale du rayon, sont comprises entre 0,1 mm et 100 mm, de préférence entre 0,3 mm et 10 mm.

5. Procédé selon l'une des revendications précédentes, **caractérisé en ce que** l'absorption induite est produite de telle sorte que la fissuration dans la structure du substrat (1) s'effectue sans ablation et sans fusion du matériau du substrat (1).

6. Procédé selon l'une des revendications précédentes, **caractérisé en ce que** l'épaisseur de couche d du substrat (1), mesurée perpendiculairement aux deux surfaces opposées l'une à l'autre (1a, 1b) du substrat, est comprise entre 30 µm et 3000 µm, de préférence entre 100 µm et 1000 µm,
et/ou
**en ce que** le rapport *V1=l*/*d* entre cette extension / de la ligne focale (2b) du rayon laser et cette épaisseur de couche d du substrat (1) est compris entre 10 et 0,5, de préférence entre 5 et 2,
et/ou
**en ce que** le rapport *V2=LlD* entre l'extension L du segment (2c) de l'absorption induite dans le matériau, c'est-à-dire dans le volume intérieur du substrat (1), quand on regarde dans la direction longitudinale du rayon, et l'extension moyenne D du segment (2c) de l'absorption induite dans le matériau, c'est-à-dire dans le volume intérieur du substrat (1), quand on regarde perpendiculairement à la direction longitudinale du rayon, est compris entre 5 et 5000, de préférence entre 50 et 500.

7. Procédé selon l'une des revendications précédentes,
**caractérisé**
**en ce que** le diamètre moyen δ de la ligne focale (2b) du rayon laser, c'est-à-dire son diamètre de tache, est compris entre 1 µm et 3 µm, de préférence est de 2 µm,
et/ou
**en ce que** la durée d'impulsion τ du laser (3) est choisie de telle sorte que, dans le temps d'interaction avec le matériau du substrat (1), la diffusion thermique de ce matériau soit négligeable, de préférence qu'aucune diffusion thermique n'ait lieu, ce pour quoi de préférence τ, δ et la diffusion thermique α du matériau du substrat (1) sont ajustés de telle sorte que τ<< δ ²/ α, et/ou que de préférence τ soit choisi à une valeur inférieure à 10 ns, de préférence inférieure à 100 ps,
et/ou
**en ce que** la fréquence de répétition des impulsions du laser (3) est comprise entre 10 kHz et 1000 kHz, et est de préférence de 100 kHz,
et/ou
**en ce que** le laser (3) est exploité sous la forme d'un laser à impulsion unique ou d'un laser à salve d'impulsions,
et/ou
**en ce que** la puissance moyenne du laser, mesurée immédiatement côté sortie du rayon laser (3), est comprise entre 30 Watt et 50 Watt.

8. Procédé selon l'une des revendications précédentes, **caractérisé en ce que** le laser, en particulier pour des verres ou des cristaux transparents dans la gamme des longueurs d'onde visibles, servant de substrat (1), est un laser Nd:YAG ayant une longueur d'onde λ de 1064 nm, ou un laser Yb:YAG ayant une longueur d'onde λ de 1030 nm, ou, en particulier pour des substrats semi-conducteurs (1) transparents dans la gamme des longueurs d'onde infrarouges, est un laser Er:YAG ayant une longueur d'onde λ comprise entre 1,5 µm et 1,8 µm.

9. Procédé selon l'une des revendications précédentes, **caractérisé en ce que** le rayon laser (2a, 2b) est envoyé perpendiculairement sur le substrat (1), c'est-à-dire en ce que le substrat (1) est, par rapport à la ligne focale (2b) du rayon laser, positionné de telle sorte que l'absorption induite ait lieu, le long du segment étendu (2c) de la ligne focale (2b) du rayon laser, perpendiculairement au plan du substrat,
ou
**en ce que** le rayon laser (2a, 2b) est envoyé sur le substrat (1) sous un angle □ supérieur à 0° par rapport à la normale au plan du substrat (1), c'est-à-dire que le substrat (1) est, par rapport à la ligne focale (2b) du rayon laser, positionné de telle sorte que l'absorption induite ait lieu, le long du segment étendu (2c) de la ligne focale (2b) du rayon laser, sous l'angle 90°-β par rapport au plan du substrat, auquel cas de préférence β ≤45°, de préférence β ≤30°.

10. Procédé selon l'une des revendications précédentes, **caractérisé**
**en ce que** le rayon laser (2a, 2b) se déplace, par rapport à la surface (1a, 4) du substrat (1), le long d'une ligne (5) le long de laquelle il s'agit de séparer le substrat (1) pour obtenir les plusieurs parties, un grand nombre (2c-1, 2c-2, ...) de segments étendus (2c) de l'absorption induite dans le volume intérieur du substrat (1) étant produits le long de cette ligne (5),
auquel cas de préférence le rapport *V3*=*α*/*δ* entre la distance moyenne *α* de segments étendus (2c), immédiatement voisins, c'est-à-dire qui n'ont pas été produits l'un après l'autre, de l'absorption induite, et le diamètre moyen δ de la ligne focale (2b) du rayon laser, c'est-à-dire le diamètre de la tache, est compris entre 0,5 et 3,0, de préférence entre 1,0 et 2,0.

11. Procédé selon l'une des revendications précédentes,
**caractérisé**
**en ce que**, pendant et/ou après la production du grand nombre (2c-1, 2c-2, ...) de segments étendus (2c) d'absorption induite dans le volume intérieur du substrat (1), des forces mécaniques sont exercées sur le substrat (1), et/ou des contraintes thermiques sont introduites dans le substrat (1), en particulier le substrat est, d'une manière non uniforme, chauffé et refroidi de nouveau, de façon à réaliser, entre des segments étendus (2c), immédiatement voisins l'un de l'autre (2c-1, 2c-2), de l'absorption induite, une fissuration pour séparer le substrat en les plusieurs parties,
de préférence les tensions thermiques étant introduites par irradiation du substrat (1) avec un laser à CO₂ le long de la ligne (5).

12. Dispositif pour l'usinage à base d'un laser d'un élément en verre ou d'une tranche, ci-après appelé "substrat" (1), pour séparer le substrat en plusieurs parties,
à l'aide duquel le rayon laser (2a, 2b) d'un laser (3) destiné à l'usinage du substrat (1) est dirigé sur ce dernier de telle sorte que le matériau du substrat (1) soit transparent pour la longueur d'onde λ du laser (3) ou pour l'essentiel transparent, ce par quoi on entend que la diminution d'intensité du rayon laser dans le matériau du substrat (1), qui a lieu le long de la direction du rayon, est de 10 % ou moins par mm de profondeur de pénétration,
comportant un montage optique (6), positionné sur la trajectoire du rayon laser (3), montage à l'aide duquel il est possible, à partir du rayon laser (2a) envoyé sur ce montage, de former côté sortie du rayon du montage optique (6) une ligne focale (2b) du rayon laser, qui s'étend longitudinalement par rapport à la direction du rayon,
à l'aide duquel le substrat (1) peut être positionné ou est positionné par rapport à la ligne focale (2b) du rayon laser de telle sorte qu'il se produise dans le matériau du substrat (1), le long d'un segment (2c), étendu dans la direction du rayon, de la ligne focale (2b) du rayon laser, une absorption induite, ce grâce à quoi il se crée une fissuration induite dans le matériau du substrat le long de ce segment étendu (2c),
**caractérisé en ce que** le dispositif comprend des moyens de telle sorte que le substrat (1) puisse être positionné ou soit positionné par rapport à la ligne focale (2b) du rayon laser de telle sorte que le segment étendu (2c) de l'absorption induite dans le matériau, c'est-à-dire dans le volume intérieur du substrat (1), s'étende jusqu'à au moins l'une des deux surfaces opposées l'une à l'autre (1a, 1b) du substrat,
**en ce que** le diamètre moyen δ de la ligne focale (2b) du rayon laser, c'est-à-dire son diamètre de tache, est compris entre 0,5 µm et 5 µm, et
**en ce que** la puissance moyenne du laser, mesurée immédiatement côté sortie du rayon laser (3), est comprise entre 10 Watt et 100 Watt.

13. Dispositif selon la revendication précédente, **caractérisé en ce que** le montage optique (6) comprend un élément optique de focalisation, présentant une aberration sphérique, de préférence une lentille convexe (7) à poli sphérique,
dans lequel, de préférence sur la trajectoire du rayon laser (3), en avant de cet élément optique de focalisation (7), un diaphragme (8) du montage optique (6), de préférence un diaphragme annulaire, est positionné, diaphragme à l'aide duquel il est possible de diaphragmer le faisceau de rayons (2aZ) se trouvant au centre du rayon laser (2a) tombant sur le diaphragme, de telle sorte que seuls tombent sur cet élément optique de focalisation les rayons marginaux (2aR) se trouvant à l'extérieur de ce centre.

14. Dispositif selon l'une des revendications précédentes, **caractérisé en ce que** le montage optique (6) comprend un élément optique ayant une surface libre asphérique, qui est façonnée de façon à former la ligne focale (2b) du rayon laser avec une extension définie l, c'est-à-dire une longueur définie dans la direction du rayon,
l'élément optique ayant une surface libre asphérique étant de préférence un prisme conique ou un axicon (9).

15. Dispositif selon l'une des trois revendications précédentes, **caractérisé en ce que** le montage optique (6) comprend, sur la trajectoire du rayon laser (3), d'abord un premier élément optique ayant une surface libre asphérique, qui est configurée pour former la ligne focale étendue (2b) du rayon laser, de préférence un prisme conique ou un axicon (10) et, côté sortie du rayon de ce premier élément optique, et aussi à une distance z*1* de ce dernier, un deuxième élément optique de focalisation, en particulier une lentille convexe (11),
dans lequel de préférence les deux éléments optiques sont positionnés et orientés de telle sorte que le premier élément optique envoie le rayonnement laser tombant sur lui d'une manière annulaire (SR) sur le deuxième élément optique, de telle sorte que la ligne focale étendue (2b) du rayon laser soit produite sur le côté sortie des rayons du deuxième élément optique à une distance z2 de ce dernier.

16. Dispositif selon la revendication précédente, **caractérisé en ce que** sur la trajectoire du rayon laser (3), un troisième élément optique de focalisation, qui est en particulier une lentille collimatrice plan-convexe (12), est positionné entre le premier et le deuxième élément optique,
dans lequel le troisième élément optique est de préférence positionné et orienté de telle sorte que le rayonnement laser formé d'une manière annulaire (SR) par le premier élément optique tombe, avec un diamètre annulaire moyen parfaitement défini *dᵣ*, sur le troisième élément optique, et que le troisième élément optique envoie le rayonnement laser d'une manière annulaire, avec ce diamètre annulaire *dᵣ* et une largeur d'anneau parfaitement définie *bᵣ,* sur le deuxième élément optique.

17. Utilisation d'un procédé ou d'un dispositif selon l'une des revendications précédentes,
• pour séparer des substrats en verre, en particulier en verre quartzeux, au borosilicate, en saphir ou à la chaux sodée, en verre au sodium, en verre trempé ou en verre non trempé, en Al₂O₃ cristallin, en SiO₂.nH₂O (opale) ou en un matériau semi-conducteur, en particulier Si, GaAs, GaN,
• pour séparer des substrats monocouches ou multicouches, en particulier de composites verre-verre, de composites verre-feuille, de composites verre-feuille-verre ou de composites verre-air-verre,
• pour séparer des substrats revêtus, en particulier de tranches de saphir métallisées, de tranches de silicium pourvues de couches de métaux ou d'oxydes métalliques, ou de substrats revêtus d'ITO ou d'AIZnO,
et/ou
• pour sectionner complètement un substrat monocouche ou multicouche, ou pour sectionner une ou plusieurs, mais non pas la totalité des couches d'un substrat multicouche.

18. Objet en verre, ayant au moins une surface comportant un grand nombre de modifications du matériau le long de la surface, chacune des modifications du matériau présentant une longueur dans la plage comprise entre 0,1 mm et 100 mm, **caractérisé en ce que** chacune des modifications du matériau présente un diamètre moyen dans la plage comprise entre 0,5 µm et 5 µm.

19. Objet en verre, ayant au moins une surface comportant un grand nombre de modifications du matériau le long de la surface, **caractérisé en ce que** chacune des modifications du matériau présente un rapport V3=α/δ d'environ 2,0 entre la distance moyenne α des modification du matériau immédiatement voisines et le diamètre moyen δ d'une ligne focale du rayon laser qui a produit les modifications du matériau.
